# EUROPEAN PATENT APPLICATION

(11) **EP 4 794 214 A1**
(43) Date of publication of application: **19.08.2026**
(21) Application number: 24884633.9
(22) Date of filing: 28.10.2024
(51) Int. Cl.: H04B 7/0456

(54) **COMMUNICATION METHOD AND COMMUNICATION APPARATUS**

(30) Priority: 31.10.2023 CN 202311440867
(71) Applicant: HUAWEI TECHNOLOGIES CO., LTD., Shenzhen 518129 (CN)
(72) Inventor: CHEN, Jiaxuan, Shenzhen, Guangdong 518129 (CN); SUN, Yan, Shenzhen, Guangdong 518129 (CN); WANG, Xiaohan, Shenzhen, Guangdong 518129 (CN)
(74) Representative: Isarpatent
(86) International application number: PCT/CN2024/127631
(87) International publication number: WO 2025/092630

(57) **Abstract**

This application provides a communication method and a communication apparatus. The method includes: A first communication apparatus compresses N pieces of second channel information based on X pieces of first channel information to obtain M pieces of compressed information. For example, an i^{th} piece of compressed information is obtained by compressing Pᵢ pieces of second channel information based on a j^{th} piece of first channel information, and obtaining time of the first channel information is earlier than obtaining time of the second channel information. The first communication apparatus sends the i^{th} piece of compressed information, and the first communication apparatus further sends the j^{th} piece of first channel information. A second communication apparatus restores the Pᵢ pieces of second channel information based on the i^{th} piece of compressed information and the j^{th} piece of first channel information that may be received at different time. In this manner, channel information (that is, the second channel information) can be fed back in a timely manner, and feedback overheads can be further reduced.

## Description

This application claims priority to Chinese Patent Application No. 202311440867.4, filed with the China National Intellectual Property Administration on October 31, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

To implement coordinated multipoint or multiband transmission, a network device needs to obtain channel state information (channel state information, CSI) of downlink channels in a plurality of points or a plurality of bands. In this way, the network device may determine related configuration information of the downlink channels based on the CSI.

A manner in which the network device learns of the CSI is as follows: The network device sends a downlink reference signal to user equipment (user equipment, UE), and the UE receives the downlink reference signal. Because the UE has known sending information of the downlink reference signal, the UE may estimate (or measure), based on the received downlink reference signal, a downlink channel through which the downlink reference signal passes, so that the UE obtains a downlink channel matrix through measurement, generates CSI, and feeds back the CSI to the network device.

To support coordinated multipoint or multiband transmission, the UE needs to feed back channel information of the plurality of points or the plurality of bands, resulting in a significant increase in CSI feedback overheads.

### SUMMARY

This application provides a communication method and apparatus, to reduce channel information feedback overheads.

According to a first aspect, a communication method is provided. The method may be performed by a communication apparatus. The communication apparatus may be a terminal device, or may be a chip or a circuit used in the terminal device, or may be a network device, or may be a chip or a circuit used in the network device. This is not limited in this application.

The method may include: compressing N pieces of second channel information based on X pieces of first channel information to obtain M pieces of compressed information, where an i^{th} piece of compressed information in the M pieces of compressed information is obtained by compressing Pᵢ pieces of second channel information based on one piece of first channel information, obtaining time of the first channel information is earlier than obtaining time of the second channel information, X, N, and M are integers greater than or equal to 1, i is an integer greater than or equal to 1 and less than or equal to M, and P is an integer greater than or equal to 1 and less than or equal to N; and sending the M pieces of compressed information and the X pieces of first channel information.

Based on the foregoing technical solution, the communication apparatus may compress the second channel information based on channel information (that is, the first channel information) before the second channel information to obtain the compressed information. For example, the compressed information does not include channel information that is in the second channel information and that is the same as the first channel information. For another example, in the compressed information, different processing is performed on the channel information that is in the second channel information and that is the same as the first channel information and channel information that is in the second channel information and that is different from the first channel information. For example, the channel information that is in the second channel information and that is the same as the first channel information is sent to another communication apparatus by using the first channel information, and the channel information that is in the second channel information and that is different from the first channel information is sent to the another communication apparatus by using the compressed information. In this way, channel information feedback overheads can be reduced. Specifically, if a plurality of pieces of second channel information are compressed based on one piece of first channel information, channel information that is in the plurality of pieces of second channel information and that is the same as the first channel information is sent to the another communication apparatus by using one piece of signaling, that is, the first channel information, and each piece of compressed information does not need to carry the channel information that is the same as the first channel information, thereby greatly reducing signaling overheads caused by feeding back the compressed information. In addition, the technical solution may further avoid a problem of feeding back aged channel information. Specifically, if obtaining time of different second channel information is different, the communication apparatus may feed back compressed information in a timely manner based on obtaining time of each piece of second channel information. Another communication apparatus may restore (or determine or obtain) the second channel information based on the compressed information and the first channel information that are received at different time.

With reference to the first aspect, in some implementations of the first aspect, the X pieces of first channel information are obtained based on W pieces of third channel information, one of the X pieces of first channel information is obtained based on at least two of the W pieces of third channel information, and W is an integer greater than X.

Based on the foregoing technical solution, first channel information used to compress second channel information may be obtained based on at least two pieces of third channel information. For example, the first channel information may be common channel information (or same channel information or a common feature) of the at least two pieces of third channel information. Based on this, the at least two pieces of third channel information obtained before the second channel information may be first processed to obtain the first channel information, and then the second channel information is compressed based on the first channel information. In this way, compression complexity can be reduced.

With reference to the first aspect, in some implementations of the first aspect, the i^{th} piece of compressed information includes information in the Pᵢ pieces of second channel information other than the first channel information.

Based on the foregoing technical solution, the compressed information does not include channel information that is in the second channel information and that is the same as the first channel information. In other words, the channel information that is in the second channel information and that is the same as the first channel information is sent to another communication apparatus by using the first channel information, and channel information that is in the second channel information and that is different from the first channel information is sent to the another communication apparatus by using the compressed information. In this way, channel information feedback overheads can be reduced.

With reference to the first aspect, in some implementations of the first aspect, the method further includes: receiving first indication information, where the first indication information indicates configuration information of each of the M pieces of compressed information, and at least two of the M pieces of compressed information have different configuration information.

Based on the foregoing technical solution, all the pieces of compressed information may have different configuration information, and the communication apparatus may feed back the compressed information in a timely manner based on the configuration information of each piece of compressed information, thereby avoiding a problem of feeding back aged channel information.

With reference to the first aspect, in some implementations of the first aspect, the configuration information of each of the M pieces of compressed information includes at least one of the following: feedback time of each piece of compressed information, a feedback periodicity of each piece of compressed information, or a time offset of each piece of compressed information.

With reference to the first aspect, in some implementations of the first aspect, the i^{th} piece of compressed information is obtained by compressing the Pᵢ pieces of second channel information based on a j^{th} piece of first channel information, and j is an integer greater than or equal to 1 and less than or equal to X. The method further includes: sending or receiving second indication information, where the second indication information indicates that the i^{th} piece of compressed information is associated with the j^{th} piece of first channel information.

Based on the foregoing technical solution, the communication apparatus determines that the i^{th} piece of compressed information is associated with the j^{th} piece of first channel information, and sends the indication information to indicate an association relationship. In this way, another communication apparatus determines, based on the association relationship, to perform processing by using the i^{th} piece of compressed information and the j^{th} piece of first channel information, to restore the second channel information. Alternatively, another communication apparatus may determine an association relationship, and send the indication information to the communication apparatus, to indicate the association relationship, so that the communication apparatus performs compression based on the association relationship.

With reference to the first aspect, in some implementations of the first aspect, that the second indication information indicates that the i^{th} piece of compressed information is associated with the j^{th} piece of first channel information includes: The second indication information indicates at least one of the following of an effective period of the j^{th} piece of first channel information: a start moment, an end moment, or a time length. A sending moment of the i^{th} piece of compressed information is within the effective period of the j^{th} piece of first channel information, or a receiving moment of the i^{th} piece of compressed information is within the effective period of the j^{th} piece of first channel information.

With reference to the first aspect, in some implementations of the first aspect, that the second indication information indicates that the i^{th} piece of compressed information is associated with the j^{th} piece of first channel information includes: The second indication information indicates a time domain offset threshold between the j^{th} piece of first channel information and the i^{th} piece of compressed information.

The time domain offset threshold may also be referred to as a time difference threshold.

Based on the foregoing technical solution, a manner in which the second indication information indicates that the compressed information is associated with the first channel information may be as follows: The second indication information indicates a time domain offset threshold between the i^{th} piece of compressed information and the first channel information applicable to the i^{th} piece of compressed information.

With reference to the first aspect, in some implementations of the first aspect, the i^{th} piece of compressed information is obtained by compressing the Pᵢ pieces of second channel information based on a j^{th} piece of first channel information, an association relationship between the i^{th} piece of compressed information and the j^{th} piece of first channel information is predefined or preconfigured, and j is an integer greater than or equal to 1 and less than or equal to X.

With reference to the first aspect, in some implementations of the first aspect, the method further includes: receiving N reference signals; and performing channel measurement on N channels based on the N reference signals to obtain the N pieces of channel information.

Based on the foregoing technical solution, the communication apparatus may perform channel measurement based on the received reference signals to obtain the channel information.

With reference to the first aspect, in some implementations of the first aspect, the method further includes: receiving third indication information, where the third indication information indicates configuration information of each of the N reference signals, and at least two of the N reference signals have different configuration information.

Based on the foregoing technical solution, all the reference signals may have different configuration information. The communication apparatus may receive a reference signal based on configuration information of the reference signal, perform channel measurement to obtain second channel information, and feed back the second channel information in a timely manner. For example, the communication apparatus performs compression based on first channel information whose obtaining time is earlier than that of the second channel information to obtain compressed information, and sends the compressed information.

With reference to the first aspect, in some implementations of the first aspect, the configuration information of each of the N reference signals includes at least one of the following: a periodicity of each reference signal, a periodicity value of each reference signal, or a time offset of each reference signal.

With reference to the first aspect, in some implementations of the first aspect, the method further includes: receiving or sending fourth indication information, where the fourth indication information indicates the Pᵢ pieces of second channel information corresponding to the i^{th} piece of compressed information, in other words, the fourth indication information indicates a correspondence between the i^{th} piece of compressed information and the Pᵢ pieces of second channel information.

Based on the foregoing technical solution, a plurality of pieces of second channel information may be jointly compressed, to be specific, the plurality of pieces of second channel information are jointly compressed based on one piece of first channel information, thereby reducing channel information feedback overheads.

With reference to the first aspect, in some implementations of the first aspect, the compressing the N pieces of second channel information based on the X pieces of first channel information to obtain the M pieces of compressed information includes: compressing the X pieces of first channel information and the N pieces of second channel information by using at least one artificial intelligence AI model to obtain the M pieces of compressed information; or projecting the N pieces of second channel information onto the X pieces of first channel information by using the X pieces of first channel information as a basis to obtain the M pieces of compressed information.

According to a second aspect, a communication method is provided. The method may be performed by a communication apparatus. The communication apparatus may be a terminal device, or may be a chip or a circuit used in the terminal device, or may be a network device, or may be a chip or a circuit used in the network device. This is not limited in this application.

The method may include: receiving M pieces of compressed information and X pieces of first channel information; and determining Pᵢ pieces of second channel information based on an i^{th} piece of compressed information in the M pieces of compressed information and one piece of first channel information, where obtaining time of the first channel information is earlier than obtaining time of the second channel information, X and M are integers greater than or equal to 1, i is an integer greater than or equal to 1 and less than or equal to M, and P is an integer greater than or equal to 1.

The obtaining time of the first channel information is earlier than the obtaining time of the second channel information, and a case in which time at which the communication apparatus receives the first channel information is earlier than time at which the communication apparatus receives the second channel information is not limited. For example, obtaining time of channel information is determined based on receiving time or sending time of a reference signal used to obtain the channel information through measurement. That the obtaining time of the first channel information is earlier than the obtaining time of the second channel information indicates that receiving time or sending time of a reference signal used to obtain the first channel information through measurement is earlier than receiving time or sending time of a reference signal used to obtain the second channel information through measurement.

With reference to the second aspect, in some implementations of the second aspect, the X pieces of first channel information are obtained based on W pieces of third channel information, one of the X pieces of first channel information is obtained based on at least two of the W pieces of third channel information, and W is an integer greater than X.

With reference to the second aspect, in some implementations of the second aspect, the i^{th} piece of compressed information includes information in the Pᵢ pieces of second channel information other than the first channel information.

With reference to the second aspect, in some implementations of the second aspect, the method further includes: sending first indication information, where the first indication information indicates configuration information of each of the M pieces of compressed information, and at least two of the M pieces of compressed information have different configuration information.

With reference to the second aspect, in some implementations of the second aspect, the configuration information of each of the M pieces of compressed information includes at least one of the following: feedback time of each piece of compressed information, a feedback periodicity of each piece of compressed information, or a time offset of each piece of compressed information.

With reference to the second aspect, in some implementations of the second aspect, the method further includes: sending or receiving second indication information, where the second indication information indicates that the i^{th} piece of compressed information is associated with a j^{th} piece of first channel information, and j is an integer greater than or equal to 1 and less than or equal to X; and the determining the Pᵢ pieces of second channel information based on the i^{th} piece of compressed information in the M pieces of compressed information and one piece of first channel information includes: determining the Pᵢ pieces of second channel information based on that the i^{th} piece of compressed information is associated with the j^{th} piece of first channel information and based on the i^{th} piece of compressed information and the j^{th} piece of first channel information.

With reference to the second aspect, in some implementations of the second aspect, that the second indication information indicates that the i^{th} piece of compressed information is associated with the j^{th} piece of first channel information includes: The second indication information indicates at least one of the following of an effective period of the j^{th} piece of first channel information: a start moment, an end moment, or a time length. A sending moment of the i^{th} piece of compressed information is within the effective period of the j^{th} piece of first channel information, or a receiving moment of the i^{th} piece of compressed information is within the effective period of the j^{th} piece of first channel information.

With reference to the second aspect, in some implementations of the second aspect, that the second indication information indicates that the i^{th} piece of compressed information is associated with the j^{th} piece of first channel information includes: The second indication information indicates a time domain offset threshold between the i^{th} piece of compressed information and the first channel information applicable to the i^{th} piece of compressed information.

With reference to the second aspect, in some implementations of the second aspect, the determining the Pᵢ pieces of second channel information based on the i^{th} piece of compressed information in the M pieces of compressed information and one piece of first channel information includes: determining the Pᵢ pieces of second channel information based on that the i^{th} piece of compressed information is associated with the j^{th} piece of first channel information and based on the i^{th} piece of compressed information and the j^{th} piece of first channel information, where an association relationship between the i^{th} piece of compressed information and the j^{th} piece of first channel information is predefined or preconfigured, and j is an integer greater than or equal to 1 and less than or equal to X.

With reference to the second aspect, in some implementations of the second aspect, the method further includes: sending N reference signals, where the N reference signals are used to perform channel measurement on N channels corresponding to the N pieces of channel information.

With reference to the second aspect, in some implementations of the second aspect, the method further includes: sending third indication information, where the third indication information indicates configuration information of each of the N reference signals, and at least two of the N reference signals have different configuration information.

With reference to the second aspect, in some implementations of the second aspect, the method further includes: receiving or sending fourth indication information, where the fourth indication information indicates the Pᵢ pieces of second channel information corresponding to the i^{th} piece of compressed information, in other words, the fourth indication information indicates a correspondence between the i^{th} piece of compressed information and the Pᵢ pieces of second channel information.

With reference to the second aspect, in some implementations of the second aspect, the determining the Pᵢ pieces of second channel information based on the i^{th} piece of compressed information in the M pieces of compressed information and one piece of first channel information includes: decoding the i^{th} piece of compressed information and the piece of first channel information by using an artificial intelligence AI model to obtain the Pᵢ pieces of second channel information.

For beneficial effects of the second aspect and the possible designs, refer to related descriptions of the first aspect. Details are not described herein again.

According to a third aspect, a communication method is provided. The method may be performed by a communication apparatus. The communication apparatus may be a terminal device, or may be a chip or a circuit used in the terminal device, or may be a network device, or may be a chip or a circuit used in the network device. This is not limited in this application.

The method may include: compressing N pieces of second channel information based on W pieces of third channel information to obtain M pieces of compressed information, where an i^{th} piece of compressed information in the M pieces of compressed information is obtained by compressing Pᵢ pieces of second channel information based on Qᵢ pieces of third channel information, obtaining time of the third channel information is earlier than obtaining time of the second channel information, W, N, and M are integers greater than or equal to 1, i is an integer greater than or equal to 1 and less than or equal to M, P is an integer greater than or equal to 1 and less than or equal to N, and Q is an integer greater than 1 and less than or equal to W; obtaining X pieces of first channel information corresponding to the W pieces of third channel information, where the Qᵢ pieces of third channel information correspond to one piece of first channel information; and sending the M pieces of compressed information and the X pieces of first channel information.

Based on the foregoing technical solution, the communication apparatus may compress the second channel information based on channel information (that is, the third channel information) before the second channel information to obtain the compressed information. The i^{th} piece of compressed information is used as an example. For example, the i^{th} piece of compressed information does not include channel information that is in the Pᵢ pieces of second channel information and that is the same as the Qᵢ pieces of third channel information. For another example, channel information that is in the Pᵢ pieces of second channel information and that is the same as the Qᵢ pieces of third channel information is sent to another communication apparatus by using the first channel information corresponding to the Qᵢ pieces of third channel information, and channel information that is in the Pᵢ pieces of second channel information and that is different from the Qᵢ pieces of third channel information is sent to the another communication apparatus by using the compressed information. In this way, channel information feedback overheads can be reduced.

With reference to the third aspect, in some implementations of the third aspect, the i^{th} piece of compressed information includes information in the Pᵢ pieces of second channel information other than the first channel information.

With reference to the third aspect, in some implementations of the third aspect, the method further includes: receiving first indication information, where the first indication information indicates configuration information of each of the M pieces of compressed information, and at least two of the M pieces of compressed information have different configuration information.

With reference to the third aspect, in some implementations of the third aspect, the configuration information of each of the M pieces of compressed information includes at least one of the following: feedback time of each piece of compressed information, a feedback periodicity of each piece of compressed information, or a time offset of each piece of compressed information.

With reference to the third aspect, in some implementations of the third aspect, the Qᵢ pieces of third channel information correspond to a j^{th} piece of first channel information, the i^{th} piece of compressed information is obtained by compressing the Pᵢ pieces of second channel information based on the third channel information corresponding to the j^{th} piece of first channel information, and j is an integer greater than or equal to 1 and less than or equal to X. The method further includes: sending or receiving second indication information, where the second indication information indicates that the i^{th} piece of compressed information is associated with the j^{th} piece of first channel information.

With reference to the third aspect, in some implementations of the third aspect, that the second indication information indicates that the i^{th} piece of compressed information is associated with the j^{th} piece of first channel information includes: The second indication information indicates at least one of the following of an effective period of the j^{th} piece of first channel information: a start moment, an end moment, or a time length, where a sending moment of the i^{th} piece of compressed information is within the effective period of the j^{th} piece of first channel information.

With reference to the third aspect, in some implementations of the third aspect, that the second indication information indicates that the i^{th} piece of compressed information is associated with the j^{th} piece of first channel information includes: The second indication information indicates a time domain offset threshold between the i^{th} piece of compressed information and the first channel information applicable to the i^{th} piece of compressed information.

With reference to the third aspect, in some implementations of the third aspect, the Qᵢ pieces of third channel information correspond to a j^{th} piece of first channel information, the i^{th} piece of compressed information is obtained by compressing the Pᵢ pieces of second channel information based on the third channel information corresponding to the j^{th} piece of first channel information, an association relationship between the i^{th} piece of compressed information and the j^{th} piece of first channel information is predefined or preconfigured, and j is an integer greater than or equal to 1 and less than or equal to X.

With reference to the third aspect, in some implementations of the third aspect, the method further includes: receiving N reference signals; and performing channel measurement on N channels based on the N reference signals to obtain the N pieces of channel information.

With reference to the third aspect, in some implementations of the third aspect, the method further includes: receiving third indication information, where the third indication information indicates configuration information of each of the N reference signals, and at least two of the N reference signals have different configuration information.

With reference to the third aspect, in some implementations of the third aspect, the configuration information of each of the N reference signals includes at least one of the following: a periodicity of each reference signal, a periodicity value of each reference signal, or a time offset of each reference signal.

With reference to the third aspect, in some implementations of the third aspect, the method further includes: receiving or sending fourth indication information, where the fourth indication information indicates the Pᵢ pieces of second channel information corresponding to the i^{th} piece of compressed information, in other words, the fourth indication information indicates a correspondence between the i^{th} piece of compressed information and the Pᵢ pieces of second channel information.

With reference to the third aspect, in some implementations of the third aspect, the compressing the N pieces of second channel information based on the W pieces of third channel information to obtain the M pieces of compressed information includes: compressing the W pieces of third channel information and the N pieces of second channel information by using at least one artificial intelligence AI model to obtain the M pieces of compressed information; or projecting the N pieces of second channel information onto the X pieces of first channel information by using the X pieces of first channel information as a basis to obtain the M pieces of compressed information.

According to a fourth aspect, a communication method is provided. The method may be performed by a communication apparatus. The communication apparatus may be a terminal device, or may be a chip or a circuit used in the terminal device, or may be a network device, or may be a chip or a circuit used in the network device. This is not limited in this application.

The method may include: compressing N pieces of second channel information based on W pieces of third channel information to obtain M pieces of compressed information, where an i^{th} piece of compressed information in the M pieces of compressed information is obtained by compressing Pᵢ pieces of second channel information based on Qᵢ pieces of third channel information, obtaining time of the third channel information is earlier than obtaining time of the second channel information, W, N, and M are integers greater than or equal to 1, i is an integer greater than or equal to 1 and less than or equal to M, P is an integer greater than or equal to 1 and less than or equal to N, and Q is an integer greater than 1 and less than or equal to W; and sending the M pieces of compressed information.

For example, the Qᵢ pieces of third channel information correspond to one piece of first channel information.

With reference to the fourth aspect, in some implementations of the fourth aspect, the method further includes: sending compressed information corresponding to the W pieces of third channel information.

For example, the compressed information corresponding to the W pieces of third channel information indicates information obtained by compressing the W pieces of third channel information. The W pieces of third channel information may correspond to one piece of compressed information, in other words, the W pieces of third channel information are compressed to obtain one piece of compressed information corresponding to the W pieces of third channel information. Alternatively, the W pieces of third channel information may correspond to a plurality of pieces of compressed information, in other words, at least two of the W pieces of third channel information are compressed to obtain one piece of compressed information corresponding to the at least two pieces of third channel information. In this case, the W pieces of third channel information correspond to at least two pieces of compressed information.

With reference to the fourth aspect, in some implementations of the fourth aspect, the i^{th} piece of compressed information includes information in the Pᵢ pieces of second channel information other than information that is the same as the Qᵢ pieces of third channel information.

With reference to the fourth aspect, in some implementations of the fourth aspect, the method further includes: receiving first indication information, where the first indication information indicates configuration information of each of the M pieces of compressed information, and at least two of the M pieces of compressed information have different configuration information.

With reference to the fourth aspect, in some implementations of the fourth aspect, the configuration information of each of the M pieces of compressed information includes at least one of the following: feedback time of each piece of compressed information, a feedback periodicity of each piece of compressed information, or a time offset of each piece of compressed information.

With reference to the fourth aspect, in some implementations of the fourth aspect, the method further includes: sending or receiving second indication information, where the second indication information indicates that the i^{th} piece of compressed information is associated with compressed information corresponding to the Qᵢ pieces of third channel information or is associated with the Qᵢ pieces of third channel information.

With reference to the fourth aspect, in some implementations of the fourth aspect, that the second indication information indicates that the i^{th} piece of compressed information is associated with the compressed information corresponding to the Qᵢ pieces of third channel information or is associated with the Qᵢ pieces of third channel information includes: The second indication information indicates at least one of the following of an effective period of the compressed information corresponding to the Qᵢ pieces of third channel information or effective periods of the Qᵢ pieces of third channel information: a start moment, an end moment, or a time length, where a sending moment of the i^{th} piece of compressed information is within the effective period of the compressed information corresponding to the Qᵢ pieces of third channel information or the effective periods of the Qᵢ pieces of third channel information.

With reference to the fourth aspect, in some implementations of the fourth aspect, that the second indication information indicates that the i^{th} piece of compressed information is associated with the compressed information corresponding to the Qᵢ pieces of third channel information or is associated with the Qᵢ pieces of third channel information includes: The second indication information indicates a time domain offset threshold between the i^{th} piece of compressed information and the compressed information corresponding to the Qᵢ pieces of third channel information applicable to the i^{th} piece of compressed information, or a time domain offset threshold between the i^{th} piece of compressed information and the Qᵢ pieces of third channel information applicable to the i^{th} piece of compressed information.

With reference to the fourth aspect, in some implementations of the fourth aspect, the method further includes: receiving N reference signals; and performing channel measurement on N channels based on the N reference signals to obtain the N pieces of channel information.

With reference to the fourth aspect, in some implementations of the fourth aspect, the method further includes: receiving third indication information, where the third indication information indicates configuration information of each of the N reference signals, and at least two of the N reference signals have different configuration information.

With reference to the fourth aspect, in some implementations of the fourth aspect, the configuration information of each of the N reference signals includes at least one of the following: a periodicity of each reference signal, a periodicity value of each reference signal, or a time offset of each reference signal.

With reference to the fourth aspect, in some implementations of the fourth aspect, the method further includes: receiving or sending fourth indication information, where the fourth indication information indicates the Pᵢ pieces of second channel information corresponding to the i^{th} piece of compressed information, in other words, the fourth indication information indicates a correspondence between the i^{th} piece of compressed information and the Pᵢ pieces of second channel information.

With reference to the fourth aspect, in some implementations of the fourth aspect, the compressing the N pieces of second channel information based on the W pieces of third channel information to obtain the M pieces of compressed information includes: compressing the W pieces of third channel information and the N pieces of second channel information by using at least one artificial intelligence AI model to obtain the M pieces of compressed information; or projecting the N pieces of second channel information onto the X pieces of first channel information by using the X pieces of first channel information as a basis to obtain the M pieces of compressed information.

According to a fifth aspect, a communication method is provided. The method may be performed by a communication apparatus. The communication apparatus may be a terminal device, or may be a chip or a circuit used in the terminal device, or may be a network device, or may be a chip or a circuit used in the network device. This is not limited in this application.

The method may include: obtaining W pieces of third channel information; receiving M pieces of compressed information; and determining Pᵢ pieces of second channel information based on an i^{th} piece of compressed information in the M pieces of compressed information and Qᵢ pieces of third channel information in the W pieces of third channel information, where obtaining time of the third channel information is earlier than obtaining time of the second channel information, M and P are integers greater than or equal to 1, i is an integer greater than or equal to 1 and less than or equal to M, W is an integer greater than 1, and Q is an integer greater than or equal to 1 and less than or equal to W.

With reference to the fifth aspect, in some implementations of the fifth aspect, the method further includes: receiving compressed information corresponding to the W pieces of third channel information, where the W pieces of third channel information are obtained based on the received compressed information corresponding to the W pieces of third channel information.

With reference to the fifth aspect, in some implementations of the fifth aspect, the i^{th} piece of compressed information in the M pieces of compressed information is obtained by compressing the Pᵢ pieces of second channel information based on the Qᵢ pieces of third channel information.

With reference to the fifth aspect, in some implementations of the fifth aspect, the i^{th} piece of compressed information includes information in the Pᵢ pieces of second channel information other than information that is the same as the Qᵢ pieces of third channel information.

With reference to the fifth aspect, in some implementations of the fifth aspect, the method further includes: sending first indication information, where the first indication information indicates configuration information of each of the M pieces of compressed information, and at least two of the M pieces of compressed information have different configuration information.

With reference to the fifth aspect, in some implementations of the fifth aspect, the configuration information of each of the M pieces of compressed information includes at least one of the following: feedback time of each piece of compressed information, a feedback periodicity of each piece of compressed information, or a time offset of each piece of compressed information.

With reference to the fifth aspect, in some implementations of the fifth aspect, the method further includes: sending or receiving second indication information, where the second indication information indicates that the i^{th} piece of compressed information is associated with compressed information corresponding to the Qᵢ pieces of third channel information or is associated with the Qᵢ pieces of third channel information.

With reference to the fifth aspect, in some implementations of the fifth aspect, that the second indication information indicates that the i^{th} piece of compressed information is associated with the compressed information corresponding to the Qᵢ pieces of third channel information or is associated with the Qᵢ pieces of third channel information includes: The second indication information indicates at least one of the following of an effective period of the compressed information corresponding to the Qᵢ pieces of third channel information or effective periods of the Qᵢ pieces of third channel information: a start moment, an end moment, or a time length, where a sending moment of the i^{th} piece of compressed information is within the effective period of the compressed information corresponding to the Qᵢ pieces of third channel information or the effective periods of the Qᵢ pieces of third channel information.

With reference to the fifth aspect, in some implementations of the fifth aspect, that the second indication information indicates that the i^{th} piece of compressed information is associated with the compressed information corresponding to the Qᵢ pieces of third channel information or is associated with the Qᵢ pieces of third channel information includes: The second indication information indicates a time domain offset threshold between the i^{th} piece of compressed information and the compressed information corresponding to the Qᵢ pieces of third channel information applicable to the i^{th} piece of compressed information, or a time domain offset threshold between the i^{th} piece of compressed information and the Qᵢ pieces of third channel information applicable to the i^{th} piece of compressed information.

With reference to the fifth aspect, in some implementations of the fifth aspect, the method further includes: sending N reference signals.

With reference to the fifth aspect, in some implementations of the fifth aspect, the method further includes: sending third indication information, where the third indication information indicates configuration information of each of the N reference signals, and at least two of the N reference signals have different configuration information.

With reference to the fifth aspect, in some implementations of the fifth aspect, the configuration information of each of the N reference signals includes at least one of the following: a periodicity of each reference signal, a periodicity value of each reference signal, or a time offset of each reference signal.

With reference to the fifth aspect, in some implementations of the fifth aspect, the method further includes: receiving or sending fourth indication information, where the fourth indication information indicates the Pᵢ pieces of second channel information corresponding to the i^{th} piece of compressed information, in other words, the fourth indication information indicates a correspondence between the i^{th} piece of compressed information and the Pᵢ pieces of second channel information.

With reference to the fifth aspect, in some implementations of the fifth aspect, the compressing the N pieces of second channel information based on the W pieces of third channel information to obtain the M pieces of compressed information includes: compressing the W pieces of third channel information and the N pieces of second channel information by using at least one artificial intelligence AI model to obtain the M pieces of compressed information; or projecting the N pieces of second channel information onto the X pieces of first channel information by using the X pieces of first channel information as a basis to obtain the M pieces of compressed information.

According to a sixth aspect, a communication apparatus is provided. The apparatus is configured to perform the method according to any one of the first aspect to the fifth aspect. Specifically, the apparatus may include a unit and/or a module configured to perform the method according to any one of the implementations of any one of the first aspect to the fifth aspect, for example, a processing unit and/or a communication unit.

In an implementation, the apparatus is a communication device (for example, a terminal device or a network device). When the apparatus is a communication device, the communication unit may be a transceiver or an input/output interface, and the processing unit may be at least one processing circuit, for example, a processor or a circuit configured to process a function in the processor. Optionally, the transceiver may be a transceiver circuit. Optionally, the input/output interface may be an input/output circuit.

In another implementation, the apparatus is a chip, a chip system, or a circuit used in a communication device. When the apparatus is a chip, a chip system, or a circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a seventh aspect, a communication apparatus is provided. The apparatus includes at least one processing circuit, configured to perform the method according to any one of the implementations of any one of the first aspect to the fifth aspect.

In an implementation, the apparatus is a communication device (for example, a terminal device or a network device).

In another implementation, the apparatus is a chip, a chip system, or a circuit used in a communication device.

The communication apparatus may include a transceiver circuit. When the apparatus is a communication device, the transceiver circuit may be a transceiver. When the apparatus is a chip, a chip system, or a circuit used in a communication device, the transceiver circuit may be an interface circuit or an input/output circuit.

Optionally, the at least one processing circuit may be configured to execute a computer program or instructions stored in a memory, to perform the method according to any one of the implementations of any one of the first aspect to the fifth aspect. The memory may be located inside the communication apparatus, or may be located outside the communication apparatus.

Optionally, the communication apparatus further includes the memory.

According to an eighth aspect, this application provides a processing circuit (or a processor), configured to perform the method according to the foregoing aspects.

Operations such as sending and obtaining/receiving related to the processing circuit (or the processor) may be understood as operations such as outputting and inputting of the processing circuit, or may be understood as sending and receiving operations performed by a radio frequency circuit and an antenna, unless otherwise specified, or provided that the operations do not contradict actual functions or internal logic of the operations in related descriptions. This is not limited in this application.

According to a ninth aspect, a computer-readable storage medium is provided. The computer-readable medium stores program code to be executed by a device, and the program code is used to perform the method according to any one of the implementations of any one of the first aspect to the fifth aspect.

According to a tenth aspect, a computer program product including instructions is provided. When the computer program product runs on a computer, the computer is caused to perform the method according to any one of the implementations of any one of the first aspect to the fifth aspect.

According to an eleventh aspect, a chip is provided. The chip includes a processing circuit and a communication interface. The processing circuit reads, through the communication interface, instructions stored in a memory, to perform the method according to any one of the implementations of any one of the first aspect to the fifth aspect.

Optionally, in an implementation, the chip further includes the memory. The memory stores a computer program or the instructions. The processing circuit is configured to execute the computer program or the instructions stored in the memory. When the computer program or the instructions are executed, the processing circuit is configured to perform the method according to any one of the implementations of any one of the first aspect to the fifth aspect.

According to a twelfth aspect, a communication system is provided, and includes the foregoing communication apparatus, for example, the communication apparatus that performs the method according to any one of the implementations of the first aspect, and the communication apparatus that performs the method according to any one of the implementations of the second aspect; for another example, the communication apparatus that performs the method according to any one of the implementations of the third aspect, and the communication apparatus that performs the method according to any one of the implementations of the second aspect; for another example, the communication apparatus that performs the method according to any one of the implementations of the fourth aspect, and the communication apparatus that performs the method according to any one of the implementations of the fifth aspect.

### BRIEF DESCRIPTION OF DRAWINGS

FIG. 1 is a diagram of a wireless communication system applicable to an embodiment of this application;
FIG. 2 is another diagram of a wireless communication system applicable to an embodiment of this application;
FIG. 3 is a diagram of a layer relationship of a neural network;
FIG. 4 is a diagram of a communication method 400 according to an embodiment of this application;
FIG. 5A to FIG. 5C are diagrams of obtaining time of different second channel information;
FIG. 6 is a diagram of an AI model applicable to an embodiment of this application;
FIG. 7A and FIG. 7B are diagrams of relationships between compressed information and first channel information applicable to an embodiment of this application;
FIG. 8A and FIG. 8B are other diagrams of relationships between compressed information and first channel information applicable to an embodiment of this application;
FIG. 9A and FIG. 9B are other diagrams of relationships between compressed information and first channel information applicable to an embodiment of this application;
FIG. 10 is another diagram of a relationship between compressed information and first channel information applicable to an embodiment of this application;
FIG. 11 is another diagram of a relationship between compressed information and first channel information applicable to an embodiment of this application;
FIG. 12 is another diagram of a relationship between compressed information and first channel information applicable to an embodiment of this application;
FIG. 13 is another diagram of a relationship between compressed information and first channel information applicable to an embodiment of this application;
FIG. 14 is a schematic flowchart applicable to an embodiment of this application;
FIG. 15 is a diagram of a communication apparatus 1500 according to an embodiment of this application;
FIG. 16 is a diagram of another communication apparatus 1600 according to an embodiment of this application; and
FIG. 17 is a diagram of a chip system 1700 according to an embodiment of this application.

### DESCRIPTION OF EMBODIMENTS

The following describes technical solutions of this application with reference to the accompanying drawings.

The technical solutions provided in this application may be applied to various communication systems, for example, a 5^{th} generation (5^{th} generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system like a 6^{th} generation (6^{th} generation, 6G) mobile communication system, or a converged system of a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet-of-things (internet-of-things, IoT) communication system, or another communication system.

A device in a communication system may send a signal to another device or receive a signal from another device. The signal may include information, signaling, data, and the like. The device may alternatively be replaced with an entity, a network entity, a communication device, a mobile device, a network element, a communication module, a node, a communication node, or the like. In this disclosure, the device is used as an example for description. For example, the communication system may include at least one terminal device and at least one network device. The network device may send a downlink signal to the terminal device, and/or the terminal device may send an uplink signal to the network device. It may be understood that, in this disclosure, the terminal device may be replaced with a first device, the network device may be replaced with a second device, and the terminal device and the network device perform a corresponding communication method in this disclosure. Alternatively, a corresponding communication method in this disclosure may be applied between network devices or between terminal devices. This is not limited herein.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device with a wireless connection function. Currently, some examples of the terminal are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a wearable device, a terminal device in a 5G network, a terminal device in a future evolved public land mobile network (public land mobile network, PLMN), or the like. This is not limited in embodiments of this application.

By way of example but not limitation, in embodiments of this application, the terminal device may alternatively be a wearable device. The wearable device may also be referred to as a wearable intelligent device, and is a general term of wearable devices such as glasses, gloves, watches, clothes, and shoes, that are intelligently designed and developed for daily wear by using a wearable technology. The wearable device is a portable device that can be directly worn on the body or integrated into clothes or an accessory of a user. The wearable device is not only a hardware device, but also implements a powerful function through software support, data exchange, and cloud interaction. In a broad sense, the wearable intelligent device includes full-featured and large-sized devices that can implement all or a part of functions without depending on smartphones, for example, smart watches or smart glasses, and includes devices that focus on a specific type of application function and need to collaboratively work with other devices such as smartphones, for example, various smart bands or smart jewelry for monitoring physical signs.

It should be understood that in some scenarios, the terminal device may alternatively serve as a base station. For example, the terminal device may serve as a scheduling entity that provides a sidelink signal between terminal devices in a V2X scenario, a D2D scenario, a P2P scenario, or the like.

In embodiments of this application, an apparatus configured to implement a function of the terminal device may be a terminal device, or may be an apparatus that can support the terminal device in implementing the function, for example, a chip system or a chip. The apparatus may be mounted in the terminal device. In embodiments of this application, the chip system may include a chip, or may include a chip and another discrete component. In embodiments of this application, an example in which the apparatus configured to implement the function of the terminal device is a terminal device is merely used for description, and constitutes no limitation on the solutions in embodiments of this application.

In embodiments of this application, the network device may be a device configured to communicate with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover the following names in a broad sense, or may be replaced with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a motor slide retainer (motor slide retainer, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, a RAN intelligent controller (RAN intelligent controller, RIC), and the like. The base station may be a macro base station, a micro base station, a relay node, a donor node or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

The base station may be fixed or movable. For example, a helicopter or an uncrewed aerial vehicle may be configured as a mobile base station, and one or more cells may move based on a position of the mobile base station. In another example, the helicopter or the uncrewed aerial vehicle may be configured as a device configured to communicate with another base station.

In some deployments, the network device mentioned in embodiments of this application may be a device including a CU or a DU, a device including the CU and the DU, or a device including a CU control plane (central unit-control plane (central unit-control plane, CU-CP)) node, a CU user plane (central unit-user plane (central unit-user plane, CU-UP)) node, and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes respectively implement a part of functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs having different functions. If a fronthaul interface between a DU and an RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, in the fronthaul interface, a part of downlink and/or uplink baseband functions is moved for implementation. For example, for downlink, one or more of precoding (precoding), digital beamforming (beamforming, BF), or inverse fast Fourier transform (inverse fast Fourier transform, IFFT)/cyclic prefix (cyclic prefix, CP) addition is moved from the DU to the RU for implementation; and for uplink, one or more of digital beamforming (beamforming, BF) or fast Fourier transform (fast Fourier transform, FFT)/cyclic prefix (cyclic prefix, CP) removal is moved from the DU to the RU for implementation. In a possible implementation, the interface may be an enhanced common public radio interface (enhanced common public radio interface, eCPRI). In an eCPRI architecture, different manners of splitting the DU and the RU correspond to different categories (categories, Cats) of eCPRIs, for example, eCPRI Cats A, B, C, D, E, and F.

The eCPRI Cat A is used as an example. For downlink transmission, splitting is performed at layer mapping. The DU is configured to implement the layer mapping and one or more functions (to be specific, one or more of encoding, rate matching, scrambling, modulation, or the layer mapping) before the layer mapping, and other functions (for example, one or more of resource element (resource element, RE) mapping, digital beamforming (beamforming, BF), or inverse fast Fourier transform (inverse fast Fourier transform, IFFT)/cyclic prefix (cyclic prefix, CP) addition) after the layer mapping are moved to the RU for implementation. For uplink transmission, splitting is performed at RE demapping. The DU is configured to implement the demapping and one or more functions (to be specific, one or more functions of decoding, rate de-matching, descrambling, demodulation, inverse discrete Fourier transform (inverse discrete Fourier transform, IDFT), channel equalization, or RE demapping) before the demapping, and other functions (for example, one or more of digital BF or fast Fourier transform (fast Fourier transform, FFT)/CP removal) after the demapping are moved to the RU for implementation. It may be understood that, for function descriptions of DUs and RUs corresponding to various categories of eCPRIs, refer to an eCPRI protocol. Details are not described herein.

In a possible design, a processing unit configured to implement a baseband function in the BBU is referred to as a baseband high (baseband high, BBH) unit, and a processing unit configured to implement a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of the software module and the hardware module.

In embodiments of this application, an apparatus configured to implement a function of the network device may be a network device, or may be an apparatus that can support the network device in implementing the function, for example, a chip system or a chip. The apparatus may be mounted in the network device. In embodiments of this application, the chip system may include a chip, or may include a chip and another discrete component. In embodiments of this application, an example in which the apparatus configured to implement the function of the network device is a network device is merely used for description, and constitutes no limitation on the solutions in embodiments of this application.

The network device and the terminal device may be deployed on land, including an indoor or outdoor device, a handheld device, or a vehicle-mounted device; may be deployed on a water surface; or may be deployed on an airplane, a balloon, and a satellite in the air. A scenario in which the network device and the terminal device are located is not limited in embodiments of this application. In addition, the terminal device and the network device may be hardware devices; or may be software functions running on dedicated hardware or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In addition, to support an artificial intelligence AI technology in a wireless network, an AI node may be further introduced in the network.

Optionally, the AI node may be deployed at one or more of the following locations in the communication system: an access network device, a terminal device, a core network device, or the like. Alternatively, the AI node may be independently deployed, for example, deployed at a location other than any one of the foregoing devices, for example, a host or a cloud server in an over the top (over the top, OTT) system. The AI node may communicate with another device in the communication system. For example, the another device may be one or more of the following: a network device, a terminal device, a network element of a core network, or the like.

It may be understood that, a quantity of AI nodes is not limited in this application. For example, when there are a plurality of AI nodes, the plurality of AI nodes may be divided based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application.

The AI node may be an AI network element or an AI module.

Communication systems applicable to embodiments of this application are first briefly described below.

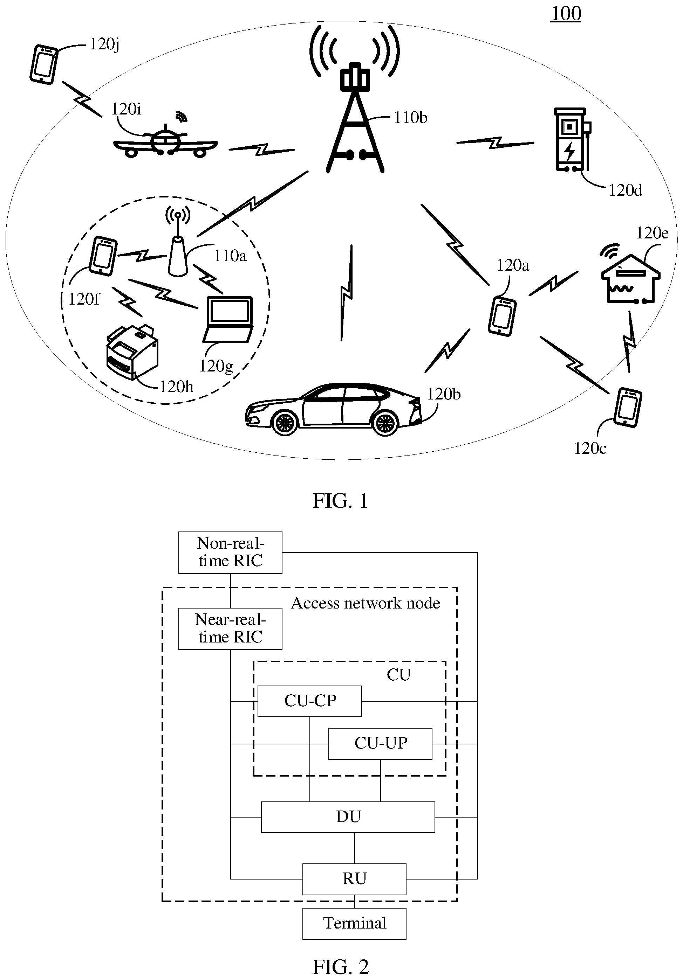

FIG. 1 is a diagram of a wireless communication system applicable to an embodiment of this application.

As shown in FIG. 1, the wireless communication system includes a radio access network 100. The radio access network 100 may be a next generation (for example, 6G or a higher version) radio access network, or a conventional (for example, 5G, 4G, 3G, or 2G) radio access network. One or more terminal devices (120a to 120j, collectively referred to as 120) may be connected to each other or connected to one or more network devices (110a and 110b, collectively referred to as 110) in the radio access network 100. Network elements in the wireless communication system are connected to each other through an interface (for example, NG or Xn) or an air interface. In addition, one or more AI modules may be disposed in each network element in the wireless communication system. AI modules deployed in different network elements may be the same or different.

FIG. 1 is merely a diagram. The wireless communication system may further include another device, for example, may further include a core network device, a wireless relay device, and/or a wireless backhaul device, which are not shown in FIG. 1.

FIG. 2 is another diagram of a wireless communication system applicable to an embodiment of this application.

As shown in FIG. 2, the wireless communication system includes a RAN intelligent controller (RAN intelligent controller, RIC). In an example, the RIC may be configured to implement AI-related functions. In an example, the RIC includes a near-real-time RIC (near-real-time RIC, near-RT RIC) and a non-real-time RIC (non-real-time RIC, Non-RT RIC). The non-real-time RIC mainly processes non-real-time information, for example, delay-insensitive data. A delay of the data may be at a granularity of seconds. A real-time RIC mainly processes near-real-time information, for example, delay-sensitive data. A delay of the data is at a granularity of tens of milliseconds.

The near-real-time RIC is configured to perform model training and inference, for example, is configured to train an AI model and perform inference by using the AI model. The near-real-time RIC may obtain information on a network side and/or a terminal side from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the inference result may be exchanged between the CU and the DU and/or between the DU and the RU. For example, the near-real-time RIC delivers the inference result to the DU, and the DU sends the inference result to the RU.

The non-real-time RIC is also configured to perform model training and inference, for example, is configured to train an AI model and perform inference by using the model. The non-real-time RIC may obtain information on a network side and/or a terminal side from a RAN node (for example, a CU, a CU-CP, a CU-UP, a DU, and/or an RU) and/or a terminal. The information may be used as training data or inference data, and an inference result may be delivered to the RAN node and/or the terminal. Optionally, the inference result may be exchanged between the CU and the DU and/or between the DU and the RU. For example, the non-real-time RIC delivers the inference result to the DU, and the DU sends the inference result to the RU.

The near-real-time RIC and the non-real-time RIC each may alternatively be independently deployed as a network element. Optionally, the near-real-time RIC and the non-real-time RIC may alternatively be used as a part of another device. For example, the near-real-time RIC is disposed in the RAN node (for example, the CU or the DU), and the non-real-time RIC is disposed in an operation, administration and maintenance (operation, administration and maintenance, OAM), a cloud server, a core network device, or another network device.

During actual application, the wireless communication system may include a plurality of network devices (also referred to as access network devices), and may include a plurality of terminal devices. This is not limited. One network device may serve one or more terminal devices. One terminal device may also access one or more network devices. Quantities of terminal devices and network devices included in the wireless communication system are not limited in embodiments of this application.

For ease of understanding of embodiments of this application, the following first briefly describes terms in embodiments of this application.

1. Artificial intelligence enables machines to learn and accumulate experience, to resolve problems such as natural language understanding, image recognition, and chess playing that can be resolved by humans through experience. The artificial intelligence may be understood as intelligence represented by machines manufactured by people. Usually, the artificial intelligence is a technology that presents human intelligence by using a computer program. An objective of the artificial intelligence includes understanding intelligence by building symbolic reasoning or computer programs for reasoning.

2. Machine learning (machine learning) is an implementation of artificial intelligence. The machine learning is a method of enabling machines to learn, so that the machines can implement functions that cannot be implemented through direct programming. In practice, the machine learning is a method of training a model by using data and then performing prediction by using the model. There are many machine learning methods, such as a neural network (neural network, NN), a decision tree, and a support vector machine. A machine learning theory is mainly to design and analyze some algorithms that enable computers to learn automatically. A machine learning algorithm is an algorithm of automatically analyzing data to obtain a rule and predicting unknown data by using the rule.

3. A neural network is a specific implementation of a machine learning method. The neural network is a mathematical model that imitates animal neural network behavior features for information processing. The idea of the neural network comes from a neuron structure of brain tissue. Each neuron may perform a weighted summation operation on input values of the neuron, and generates an output based on a result of the weighted summation operation by using an activation function.

The neural network usually includes a plurality of layers of structures, and each layer may include one or more logical determining units. The logical determining unit may be referred to as a neuron (neuron). An expression capability of the neural network may be improved by increasing a depth and/or a width of the neural network, to provide more powerful information extraction and abstraction modeling capabilities for a complex system. The depth of the neural network may be understood as a quantity of layers included in the neural network, and a quantity of neurons included in each layer may be referred to as a width of the layer.

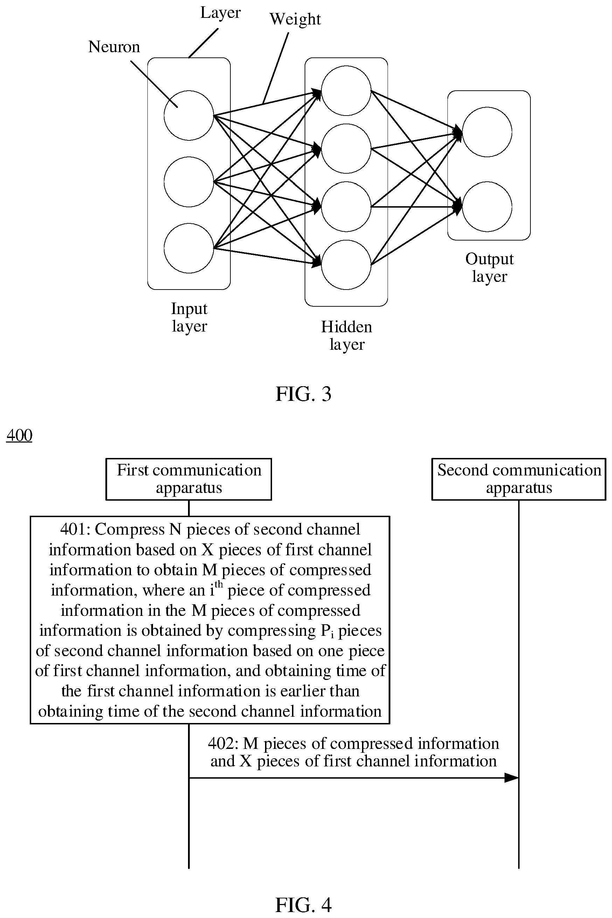

FIG. 3 is a diagram of a layer relationship of a neural network.

In a possible implementation, the neural network includes an input layer and an output layer. After performing neuron processing on a received input, the input layer of the neural network transfers a result to the output layer, and the output layer obtains an output result of the neural network.

In another possible implementation, the neural network includes an input layer, a hidden layer, and an output layer, as shown in FIG. 3. After performing neuron processing on a received input, the input layer of the neural network transfers a result to the intermediate hidden layer. The hidden layer then transfers a calculation result to the output layer or an adjacent hidden layer. Finally, the output layer obtains an output result of the neural network. One neural network may include one hidden layer or a plurality of sequentially connected hidden layers. This is not limited.

A loss function may be defined in a process of training the neural network. The loss function is used to measure a difference between a value predicted by the model and an actual value. In the process of training the neural network, the loss function describes a gap or a difference between an output value and an ideal target value of the neural network. The process of training the neural network is a process of adjusting a neural network parameter, so that a value of the loss function is less than a threshold or meets a target requirement. The neural network parameter may include at least one of the following: the quantity of layers of the neural network, the width of the neural network, a weight of a neuron, or a parameter in an activation function of the neuron.

4. A deep neural network (deep neural network) is a neural network having a plurality of hidden layers.

5. Deep learning (deep learning) is machine learning performed based on a deep neural network.

6. An AI model is an algorithm or a computer program that can implement an AI function. The AI model represents a mapping relationship between an input and an output of the model. In other words, the AI model is a function model that maps an input in a dimension to an output in a dimension. A parameter of the function model may be obtained through machine learning and training. For example, f(x)=ax²+b is a quadratic function model, and may be considered as an AI model, where a and b are parameters of the AI model, and a and b may be obtained through machine learning and training. For example, an AI model mentioned in the following embodiments of this application is not limited to a neural network, a linear regression model, a decision tree model, a support vector machine (support vector machine, SVM), a Bayesian network, a Q-learning model, or another machine learning (machine learning, ML) model.

The AI model may be implemented by a hardware circuit, software, or a combination of software and hardware. This is not limited. A non-limitative example of the software includes program code, a program, a subprogram, an instruction, an instruction set, code, a code segment, a software module, an application program, a software application program, or the like.

In addition, an encoder may have a plurality of AI models deployed, so that the encoder can perform encoding based on the deployed AI models, for example, compress channel information. A decoder may have a plurality of AI models deployed, so that the decoder can perform decoding based on the deployed AI models, for example, restore compressed information to obtain channel information. In the following descriptions, for brevity, the AI model deployed in the encoder is referred to as an AI model of the encoder, and the AI model deployed in the decoder is referred to as an AI model of the decoder.

In addition, in embodiments of this application, the encoder and the decoder may each be a communication device (for example, a terminal device or a network device) or may be disposed in the communication device. In embodiments of this application, an example in which the encoder and the decoder are communication devices is mainly used for description. The encoder is a terminal device, and the decoder is a network device. Alternatively, the encoder is a terminal device, and the decoder is another terminal device. Alternatively, the encoder is a network device, and the decoder is another network device. Alternatively, the encoder is a network device, and the decoder is a terminal device. This is not limited.

7. A model application is to resolve a practical problem by using a trained model.

8. A reference signal may also be referred to as a pilot (pilot), a reference sequence, a base signal, or the like. For unification, the following uses the reference signal for description. The reference signal is a physical signal that carries a sequence and that is sent for implementing a specific function. Specifically, the reference signal is a physical signal generated after a specific sequence is mapped to a corresponding resource in a preset resource mapping manner.

In this application, the reference signal (reference signal, RS) may be, for example, any one of the following: a channel state information reference signal (channel state information reference signal, CSI-RS), a sounding reference signal (sounding reference signal, SRS), a demodulation reference signal (demodulation reference signal, DMRS), a phase tracking reference signal (phase tracking reference signal, PT-RS), a cell reference signal (cell reference signal, CRS), or the like.

It should be understood that the foregoing listed reference signals are merely examples, and should not constitute any limitation on this application. This application does not exclude a possibility of defining another reference signal in a future protocol to implement a same or similar function.

9. Channel information indicates information that can reflect a channel feature and channel quality.

In an example, the channel information is at least one of the following: channel state information (channel state information, CSI), channel time-varying information, channel frequency offset information, or the like. The following mainly uses an example in which the channel information is CSI for description. It may be understood that any type of information that can reflect a channel feature and channel quality is applicable to embodiments of this application.

In a currently widely used FDD-based communication system, uplink and downlink channels do not have reciprocity. Therefore, a network side obtains downlink CSI in a manner of performing uplink feedback by a terminal device. Specifically, the network side sends a downlink reference signal to the terminal device, and the terminal device receives the downlink reference signal. Because the terminal device knows sending information of the downlink reference signal, the terminal device may estimate (or measure), based on the received downlink reference signal, a downlink channel through which the downlink reference signal passes, so that the terminal device can obtain a downlink channel matrix through measurement, generate CSI, and feed back the CSI to the network side.

In an example, the CSI includes at least one of the following: a channel quality indication (channel quality indication, CQI), a precoding matrix indicator (precoding matrix indicator, PMI), a rank indicator (rank indicator, RI), a CSI-RS resource indicator (CSI-RS resource indicator, CRI), a layer indicator (layer indicator, LI), reference signal received power (reference signal received power, RSRP), a signal to interference plus noise ratio (signal to interference plus noise ratio, SINR), or the like. The signal to interference plus noise ratio may also be referred to as a signal-to-interference-plus-noise ratio. The RI may indicate a quantity, recommended by the terminal device, of layers of downlink transmission. The CQI may indicate a modulation and coding scheme that is determined by the terminal device and that can be supported by a current channel condition. The PMI may indicate precoding recommended by the terminal device. A quantity, indicated by the PMI, of layers of the precoding corresponds to the RI. It should be understood that, the RI, the CQI, the PMI, and the like that are indicated in a CSI report are merely recommended values of the terminal device. The network device may perform downlink transmission based on a part or all of information indicated in the CSI report. Alternatively, the network device may perform downlink transmission without referring to the information indicated in the CSI report.

In wireless communication, with the development of large-scale multiple-input multiple-output (multiple-input multiple-output, MIMO) systems, higher requirements are imposed on communication systems in terms of indexes such as system capacities and communication delays. In wireless communication, coordinated multipoint or multiband transmission is supported. Specifically, a plurality of network devices may serve a terminal device in a coordinated manner, or one network device may serve the terminal device by using channels in a plurality of bands. In this way, a quantity of data transport streams that can be simultaneously supported by the network device can be increased, and data between terminal devices or data between different data streams of a same terminal device is isolated in space or frequency domain, thereby increasing a user experience rate.

To implement coordinated multipoint or multiband transmission, the network device needs to obtain CSI of downlink channels in a plurality of points or a plurality of bands, resulting in a significant increase in CSI feedback overheads. In addition, if the terminal device performs joint feedback after completing measurement of a plurality of channels (that is, the channels in the plurality of points or the plurality of bands), when measurement time of the plurality of channels is different, a long delay may be caused by waiting for completion of the measurement of the plurality of channels. As a result, fed-back channel information is aged channel information. Using the aged channel information to perform an operation such as precoding may cause communication performance degradation.

In view of this, this application provides a manner to support asynchronous feedback of different channel information. To be specific, after each piece of channel information is obtained, the channel information is fed back in a timely manner, so that a channel aging problem caused by joint channel information feedback can be avoided. In addition, common channel information of a plurality of pieces of channel information may be extracted, so that feedback overheads can be reduced.

It should be noted that in this application, an "indication" may include a direct indication, an indirect indication, an explicit indication, and an implicit indication. When a specific piece of indication information is described as indicating A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information to be sent separately, where sending periodicities and/or sending occasions of these pieces of sub-information may be the same or different.

It should be understood that, in this application, that information C is used to determine information D includes that the information D is determined based only on the information C, and also includes that the information D is determined based on the information C and other information. In addition, that the information C is used to determine the information D may further include an indirect determining case. For example, the information D is determined based on information E, and the information E is determined based on the information C.

In addition, in embodiments of this application, that "a network element A sends information A to a network element B" may be understood as that a destination end of the information A or an intermediate network element in a transmission path to the destination end is the network element B, and may include directly or indirectly sending the information to the network element B. That "the network element B receives the information A from the network element A" may be understood as that a source end of the information A or an intermediate network element in a transmission path from the source end is the network element A, and may include directly or indirectly receiving the information from the network element A. Information may undergo necessary processing, for example, a format change, between a source end and a destination end for sending of the information. However, the destination end may understand valid information from the source end. Similar descriptions in this application may be understood similarly, and details are not described herein.

The following describes in detail a communication method provided in embodiments of this application with reference to the accompanying drawings. Embodiments provided in this application may be applied to the communication system shown in FIG. 1 or FIG. 2. This is not limited.

FIG. 4 is a diagram of a communication method 400 according to an embodiment of this application. The method 400 shown in FIG. 4 may include the following steps.

401: A first communication apparatus compresses N pieces of second channel information based on X pieces of first channel information to obtain M pieces of compressed information, where an i^{th} piece of compressed information in the M pieces of compressed information is obtained by compressing Pᵢ pieces of second channel information based on one piece of first channel information, and obtaining time of the first channel information is earlier than obtaining time of the second channel information.

X, N, and M are integers greater than or equal to 1, i is an integer greater than or equal to 1 and less than or equal to M, and P is an integer greater than or equal to 1 and less than or equal to N. It may be understood that, when values of i are different, values of Pᵢ may be different or may be the same. In other words, quantities of pieces of second channel information used to obtain different compressed information may be the same or may be different. This is not limited herein.

Compression represents a processing manner in which a quantity of transmission resources can be reduced. Specifically, compared with information before the compression, compressed information basically does not lose transmitted content, or lost content is within an acceptable range of a system, so that the quantity of required transmission resources are reduced.

The first channel information may be understood as channel information obtained before the second channel information. For example, the first channel information is channel information determined based on historical channel information, and the second channel information is instantaneous channel information, or the second channel information reflects a channel condition at a current moment. The first channel information and the second channel information are described in detail below.

Each of the M pieces of compressed information may be obtained by compressing at least one piece of second channel information based on one piece of first channel information. Second channel information used to obtain different compressed information is different, and first channel information used to obtain different compressed information may be the same or may be different.

For example, M=2. For differentiation, two pieces of compressed information are referred to as a 1^{st} piece of compressed information and a 2^{nd} piece of compressed information. The 1^{st} piece of compressed information may be obtained by compressing P₁ pieces of second channel information and one piece of first channel information (referred to as first channel information #1 for differentiation), and the 2^{nd} piece of compressed information may be obtained by compressing P₂ pieces of second channel information and one piece of first channel information (referred to as first channel information #2 for differentiation). Both P₁ and P₂ are integers greater than or equal to 1 and less than N. The P₁ pieces of second channel information are different from the P₂ pieces of second channel information, and the first channel information #1 may be the same as or different from the first channel information #2.

The i^{th} piece of compressed information is used as an example. Optionally, the i^{th} piece of compressed information includes information in the Pᵢ pieces of second channel information other than the first channel information.

Specifically, assuming that the i^{th} piece of compressed information is obtained by compressing the Pᵢ pieces of second channel information based on one piece of first channel information (referred to as first channel information #1 for differentiation), the i^{th} piece of compressed information includes information in the Pᵢ pieces of second channel information other than the first channel information #1. In other words, the i^{th} piece of compressed information does not include information that is in the Pᵢ pieces of second channel information and that is the same as the first channel information #1, or the i^{th} piece of compressed information includes information that is in the Pᵢ pieces of second channel information and that is different from the first channel information #1. Based on this, a characteristic feature (or characteristic channel information, to be specific, the information that is in the Pᵢ pieces of second channel information and that is different from the first channel information #1) of a feedback channel may be fed back to a second communication apparatus by using the compressed information, and a common feature (or common channel information, to be specific, the information that is in the Pᵢ pieces of second channel information and that is the same as the first channel information #1) may be fed back to the second communication apparatus by using the first channel information #1.

In this embodiment of this application, the i^{th} piece of compressed information is mentioned a plurality of times, and may indicate an i^{th} piece of compressed information obtained by sorting the M pieces of compressed information in a specific sorting manner. The sorting manner may be sorting in a sequence of obtaining time of compressed information, or may be sorting in a sequence of obtaining time of second channel information corresponding to the compressed information. This is not limited herein.

Similarly, a j^{th} piece of first channel information described below may indicate a j^{th} piece of compressed information obtained by sorting the X pieces of first channel information in a specific sorting manner. The sorting manner may be sorting in a sequence of obtaining time of first channel information, or may be sorting in a sequence of latest obtaining time of at least two pieces of third channel information corresponding to the first channel information. This is not limited herein.

402: The first communication apparatus sends the M pieces of compressed information and the X pieces of first channel information.

It may be understood that step 402 does not limit a case in which the M pieces of compressed information and the X pieces of first channel information are sent simultaneously. For example, sending time of all of the M pieces of compressed information may be the same or different. For another example, sending time of all of the X pieces of first channel information may be the same or different. For another example, sending time of the compressed information may be the same as or different from that of the first channel information. For example, after obtaining one piece of second channel information, the first communication apparatus may compress the second channel information based on first channel information in a timely manner to obtain compressed information, and feed back the compressed information in a timely manner. A solution in which the first communication apparatus obtains the second channel information is described in detail below.

The second communication apparatus receives the M pieces of compressed information and the X pieces of first channel information. In this way, the second communication apparatus may determine the N pieces of second channel information based on the M pieces of compressed information and the X pieces of first channel information. Specifically, the second communication apparatus determines, based on compressed information and first channel information used to obtain the compressed information, second channel information used to obtain the compressed information.

For example, the i^{th} piece of compressed information is used as an example. Assuming that the i^{th} piece of compressed information is obtained by compressing the Pᵢ pieces of second channel information based on the j^{th} piece of first channel information, where j is an integer greater than or equal to 1 and less than or equal to X, the second communication apparatus may determine the Pᵢ pieces of second channel information based on the i^{th} piece of compressed information and the j^{th} piece of first channel information. It may be understood that, for each of the M pieces of compressed information, the second communication apparatus may determine, based on the compressed information and first channel information used to obtain the compressed information, second channel information used to obtain the compressed information.

The first communication apparatus may be a terminal device or a component (for example, a chip or a circuit) of the terminal device, and the second communication apparatus may be a network device or a component (for example, a chip or a circuit) of the network device. Alternatively, the first communication apparatus may be a network device or a component (for example, a chip or a circuit) of the network device, and the second communication apparatus may be a terminal device or a component (for example, a chip or a circuit) of the terminal device.

Based on the foregoing technical solution, the first communication apparatus may compress the second channel information based on channel information (that is, the first channel information) before the second channel information to obtain the compressed information. For example, the compressed information does not include channel information that is in the second channel information and that is the same as the first channel information. In this way, the channel information that is in the second channel information and that is the same as the first channel information is sent to the second communication apparatus by using the first channel information, and channel information that is in the second channel information and that is different from the first channel information is sent to the second communication apparatus by using the compressed information. In this way, feedback overheads can be reduced. Specifically, if a plurality of pieces of second channel information are compressed based on one piece of first channel information, channel information that is in the plurality of pieces of second channel information and that is the same as the first channel information is sent to the second communication apparatus by using one piece of signaling, that is, the first channel information, and each piece of compressed information does not need to carry the channel information that is the same as the first channel information, thereby greatly reducing signaling overheads caused by feeding back the compressed information. In addition, the technical solution may further avoid a problem of feeding back aged channel information. For example, if obtaining time of different second channel information is different, the first communication apparatus may feed back compressed information in a timely manner based on obtaining time of each piece of second channel information. The second communication apparatus may determine the second channel information based on the compressed information and the first channel information that are received at different time.

The following describes in detail solutions of this application.

First, a solution about the second channel information is described.

In an example, this embodiment of this application may be applied to a multi-domain channel information feedback scenario, to be specific, a scenario of feeding back channel information of N channels. The multi-domain may refer to a plurality of port groups (or referred to as a plurality of antenna port groups, or referred to as a plurality of network devices) in a single band, or a single port group (or referred to as a single antenna port group, or referred to as a single network device) in a plurality of bands, or a plurality of port groups (or referred to as a plurality of antenna port groups, or referred to as a plurality of network devices) in a plurality of bands. Specifically, the N pieces of second channel information indicate information about N channels, where N may represent a quantity of port groups, or may represent a quantity of bands. This is not limited herein. For example, in a scenario in which one network device serves the terminal device by using channels in a plurality of bands, or in a scenario in which one network device transmits a signal to the terminal device by using one port group in a plurality of bands, N represents a quantity of bands. For another example, in a scenario in which a plurality of network devices serve the terminal device by using one band in a coordinated manner, or in a scenario in which a plurality of network devices transmit signals to the terminal device by using a plurality of port groups in one band, N represents a quantity of network devices or a quantity of port groups. For another example, in a scenario in which a plurality of network devices serve the terminal device by using a plurality of bands in a coordinated manner, or in a scenario in which a plurality of network devices transmit signals to the terminal device by using a plurality of port groups in a plurality of bands, N=N1*N2, where N1 represents a quantity of network devices or a quantity of port groups, and N2 represents a quantity of bands.

The foregoing is an example for description. This is not limited. For example, the information about the N channels may also indicate channel information obtained through measurement at different moments, or the information about the N channels may also indicate channel information obtained through measurement by using different transmit beams (transmit weights), or the information about the N channels may also indicate channel information obtained through measurement by using different receive beams (receive weights), or the information about the N channels may also indicate channel information corresponding to N reference signal resources (or referred to as channel information corresponding to N reference signal resource groups).

As described above, in an example, the second channel information may be understood as instantaneous channel information, or the second channel information reflects a channel condition at a current moment. Therefore, the first communication apparatus may perform channel measurement based on a currently received reference signal to obtain second channel information.

Optionally, the method 400 further includes: The first communication apparatus receives N reference signals, and measures the N channels based on the N reference signals to obtain the N pieces of second channel information.

For example, if the first communication apparatus is a terminal device, and the second communication apparatus is a network device, the reference signal may be a downlink reference signal, for example, a CSI-RS or a DMRS. If the first communication apparatus is a network device, and the second communication apparatus is a terminal device, the reference signal may be an uplink reference signal, for example, an SRS or a DMRS.

Sending time of the N reference signals may be the same or different. Correspondingly, obtaining time of the N pieces of second channel information may be the same or different, which may specifically depend on an actual communication situation.

In an example, obtaining time of second channel information is determined based on receiving time or sending time of a reference signal used to obtain the second channel information through measurement. A piece of second channel information (referred to as second channel information #1 for differentiation) is used as an example. Assuming that the second channel information #1 is obtained by performing channel measurement on a reference signal (referred to as a reference signal #1 for differentiation), obtaining time of the second channel information #1 may be determined based on receiving time or sending time of the reference signal #1. For example, the obtaining time of the second channel information #1 is equal to a sum of the receiving time of the reference signal #1 and Δ1, or the obtaining time of the second channel information #1 is equal to a sum of the sending time of the reference signal #1 and Δ2. Δ1 and Δ2 are numbers greater than or equal to 0.

Obtaining time of different second channel information may be different.

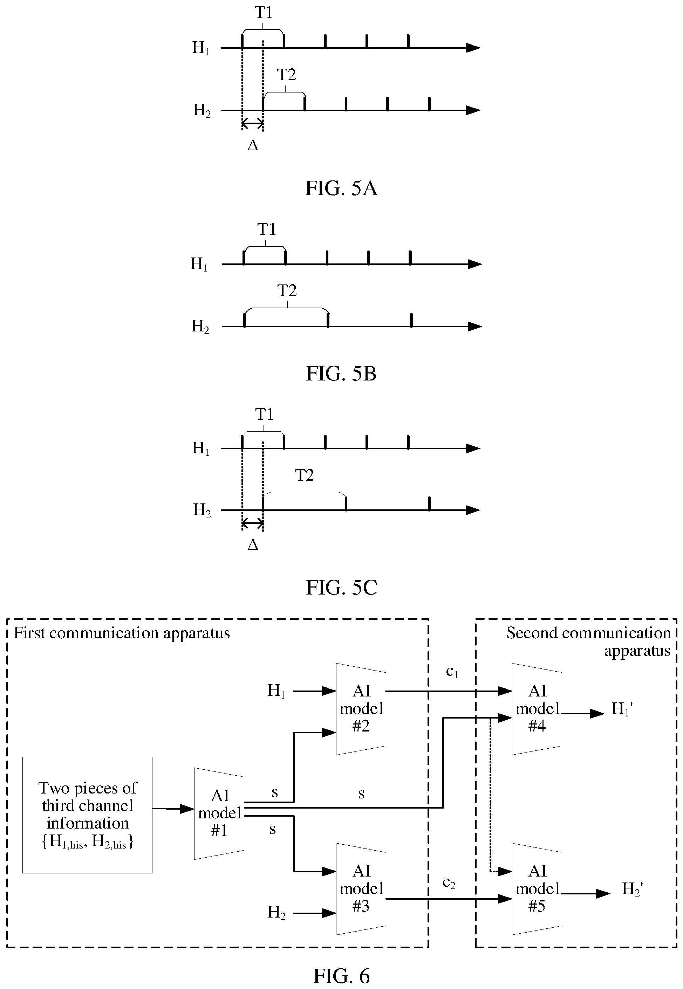

FIG. 5A to FIG. 5C are diagrams of obtaining time of different second channel information.

It is assumed that the N pieces of second channel information include two pieces of second channel information. For differentiation, the two pieces of second channel information are denoted as H₁ and H₂, and obtaining time of H₁ and obtaining time of H₂ may be shown in FIG. 5A to FIG. 5C. As shown in FIG. 5A to FIG. 5C, the obtaining time of H₁ and the obtaining time of H₂ are periodic. In other words, a reference signal used to obtain H₁ is periodically sent, and a reference signal used to obtain H₂ is also periodically sent. It is assumed that a periodicity value of the obtaining time of H₁ is T1, and a periodicity value of the obtaining time of H₂ is T2.

In a possible case, the obtaining time of H₁ and the obtaining time of H₂ have a same periodicity, and the obtaining time of H₁ and the obtaining time of H₂ correspond to different offsets. As shown in FIG. 5A, the periodicity value T1 of the obtaining time of H₁ is equal to the periodicity value T2 of the obtaining time of H₂, and in one feedback, the obtaining time of H₁ is earlier than the obtaining time of H₂ by Δ.

In another possible case, the obtaining time of H₁ and the obtaining time of H₂ correspond to a same offset, and the obtaining time of H₁ and the obtaining time of H₂ have different periodicity values. As shown in FIG. 5B, in one feedback, the obtaining time of H₁ is the same as the obtaining time of H₂, and the periodicity value T1 of the obtaining time of H₁ is less than the periodicity value T2 of the obtaining time of H₂.

In another possible case, the obtaining time of H₁ and the obtaining time of H₂ correspond to different offsets, and the obtaining time of H₁ and the obtaining time of H₂ have different periodicity values. As shown in FIG. 5C, in one feedback, the obtaining time of H₁ is earlier than the obtaining time of H₂ by Δ, and the periodicity value T1 of the obtaining time of H₁ is less than the periodicity value T2 of the obtaining time of H₂.

Further, optionally, the method 400 further includes: The first communication apparatus receives indication information #1, where the indication information #1 indicates configuration information of each of the N reference signals, and at least two of the N reference signals have different configuration information. In an example, the configuration information of each of the N reference signals includes at least one of the following: a periodicity of each reference signal, a periodicity value (or referred to as a periodicity size) of each reference signal, or a time offset of each reference signal.

The periodicity of the reference signal may also be referred to as a sending manner of the reference signal, which generally includes: periodic, aperiodic, or semi-static sending. For example, the reference signal is periodic, indicating that the second communication apparatus periodically sends the reference signal to the first communication apparatus. The reference signal is aperiodic, indicating that the second communication apparatus aperiodically sends the reference signal to the first communication apparatus. The reference signal is semi-static, indicating that the second communication apparatus semi-statically sends the reference signal to the first communication apparatus. Specifically, after configuring information about the semi-static reference signal, the second communication apparatus does not immediately send the reference signal. The second communication apparatus first sends activation signaling to notify the first communication apparatus, and after the activation signaling takes effect, the second communication apparatus periodically sends the reference signal. The second communication apparatus stops sending the reference signal when the second communication apparatus delivers deactivation signaling, or stops sending the reference signal when a timer or a counter stops. In an example, start time of the timer or the counter is time at which the first communication apparatus receives the activation signaling, and running duration of the timer or the counter may be predefined or preconfigured. This is not limited.

The periodicity value of the reference signal is also referred to as a periodicity size of the reference signal. If the reference signal is periodic or semi-static, the configuration information of the reference signal may further include the periodicity value of the reference signal.

The time offset of the reference signal represents a time offset of delivery time of the reference signal in one periodicity. FIG. 5A is used as an example. A time offset of delivery time of the reference signal corresponding to the channel information H₁ in one periodicity is 0, and a time offset of delivery time of the reference signal corresponding to the channel information H₂ in one periodicity is Δ. It may be understood that the time offset may be positive, may be negative, or may be 0.

The foregoing describes the solution about the second channel information. The following then describes a solution about the first channel information.

The obtaining time of the first channel information is earlier than the obtaining time of the second channel information. In an example, the second channel information is instantaneous channel information, or the second channel information reflects a channel condition at a current moment; and the first channel information is determined based on channel information in a time period or at a specific moment before the current moment. Therefore, it may be understood as that the obtaining time of the first channel information is earlier than the obtaining time of the second channel information.

Optionally, the X pieces of first channel information are obtained based on W pieces of third channel information, and W is an integer greater than X.

Obtaining time of the third channel information is earlier than that of the first channel information, and one piece of first channel information is obtained based on at least two pieces of third channel information.

One piece of first channel information (for example, referred to as first channel information #1) is used as an example. The first channel information #1 is obtained based on *w* pieces of third channel information, where *w* is an integer greater than 1 and less than or equal to W. In an example, the first channel information #1 may be common channel information (or common information or a common feature) in the *w* pieces of third channel information. In other words, same information in the *w* pieces of third channel information is referred to as the first channel information #1. The common channel information (or the common information or the common feature) in the *w* pieces of third channel information indicates same information (or a same feature) in the *w* pieces of third channel information. In an example, the common channel information (or the common information or the common feature) in the *w* pieces of third channel information includes but is not limited to at least one of the following: a same delay feature, a same space domain feature, or a same Doppler domain feature.

In an example, third channel information used to obtain all of the first channel information is different.

For example, X=1, and W=3. One piece of first channel information is obtained based on three pieces of third channel information.

For another example, X=2, and W=5. For differentiation, two pieces of first channel information are referred to as first channel information #1 and first channel information #2, and five pieces of third channel information are referred to as third channel information #1, third channel information #2, third channel information #3, third channel information #4, and third channel information #5. For example, the first channel information #1 is obtained based on the third channel information #1, the third channel information #2, and the third channel information #3, and the first channel information #2 is obtained based on the third channel information #4 and the third channel information #5.

In an example, one piece of first channel information is obtained based on at least two pieces of third channel information. This may be implemented in the following manner.

In a possible implementation, one piece of first channel information is obtained based on at least two pieces of third channel information. This may be implemented by using an AI model. To be specific, the AI model inputs at least two pieces of third channel information, and outputs one piece of first channel information.

For example, data in a training set (where a group of data includes at least two pieces of third channel information) is input into an encoder to obtain first channel information, and then the first channel information is input into a decoder to obtain a recovery value input by the encoder; a 2-norm of a difference between an input of the encoder and an output of the decoder is used as a loss function, and weights of the encoder and the decoder are updated to continuously reduce the loss function until convergence. For another example, joint training is performed on an encoder that obtains first channel information and an encoder that obtains compressed information. The following provides descriptions with reference to FIG. 6.

FIG. 6 is a diagram of an AI model applicable to an embodiment of this application.

As shown in FIG. 6, it is assumed that a group of data in a training set includes two pieces of second channel information and a plurality of pieces of third channel information (for example, two pieces of third channel information in FIG. 6), and the two pieces of second channel information are respectively referred to as H₁ and H₂. In this case, the plurality of pieces of third channel information are input into an AI model #1 to obtain first channel information s, s and the second channel information H₁ are input into an AI model #2 to obtain compressed information c₁, s and the second channel information H₂ are input into an AI model #3 to obtain compressed information c₂, c₁ and s are input into an AI model #4 to obtain H₁', and c₂ and s are input into an AI model #5 to obtain H₂'. Norms of a difference between H₁ and H₁' and a difference between H₂ and H₂' are used to obtain a loss function, and weights of the AI model #1 to the AI model #5 are updated to continuously reduce the loss function until convergence.

For the first communication apparatus, the first communication apparatus may determine the first channel information by itself; or another communication apparatus may determine the first channel information, and send the first channel information to the first communication apparatus.

Considering that the X pieces of first channel information are obtained based on the W pieces of third channel information, step 401 may also be replaced with the following: The first communication apparatus compresses the N pieces of second channel information based on the W pieces of third channel information to obtain the M pieces of compressed information, where the i^{th} piece of compressed information in the M pieces of compressed information is obtained by compressing the Pᵢ pieces of second channel information based on at least two pieces of third channel information, and the obtaining time of the third channel information is earlier than the obtaining time of the second channel information. FIG. 6 is used as an example. The plurality of pieces of third channel information may be directly input into the AI model #2 and the AI model #3. To be specific, the plurality of pieces of third channel information are input into the AI model #1 to obtain the first channel information s, the plurality of pieces of third channel information and the second channel information H₁ are input into the AI model #2 to obtain the compressed information c₁, the plurality of pieces of third channel information and the second channel information H₂ are input into the AI model #3 to obtain the compressed information c₂, c₁ and s are input into the AI model #4 to obtain H₁', and c₂ and s are input into the AI model #5 to obtain H₂'. In addition, step 402 may also be replaced with sending the M pieces of compressed information and compressed information corresponding to the W pieces of third channel information. FIG. 6 is used as an example. The plurality of pieces of third channel information are input into the AI model #1, compressed information corresponding to the plurality of pieces of third channel information is output, c₁ and the compressed information corresponding to the plurality of pieces of third channel information are input into the AI model #4 to obtain H₁', and c₂ and the compressed information corresponding to the plurality of pieces of third channel information are input into the AI model #5 to obtain H₂'. It may be understood that step 402 may also be replaced with sending the M pieces of compressed information, in other words, the compressed information corresponding to the W pieces of third channel information may not need to be sent again. Because the W pieces of third channel information are historical channel information, the second communication apparatus has obtained the W pieces of third channel information before processing the M pieces of compressed information, for example, has obtained the W pieces of third channel information through decompression. In this case, initial third channel information may be a preset known value, or only compressed information of the initial third channel information is sent. In this way, signaling or data overheads between the first communication apparatus and the second communication apparatus can be reduced.

In addition, as described in step 402, the first communication apparatus sends the X pieces of first channel information. One piece of first channel information is used as an example. That the first communication apparatus sends the first channel information may include the following implementations.

In a first possible implementation, the first communication apparatus periodically or semi-statically sends the first channel information.

In a second possible implementation, the first communication apparatus sends the first channel information to the second communication apparatus based on a request of the second communication apparatus. For example, when the second communication apparatus indicates the first communication apparatus to send compressed information associated with the first channel information, the first communication apparatus sends the first channel information to the second communication apparatus. For another example, the second communication apparatus indicates the first communication apparatus to send the first channel information to the second communication apparatus before compressing at least one piece of second channel information based on the first channel information. For another example, the second communication apparatus sends a request message to the first communication apparatus, where the request message is used to request the first communication apparatus to send the first channel information used to compress at least one piece of second channel information. First channel information associated with one piece of compressed information indicates first channel information used to obtain the compressed information. Specifically, if one piece of compressed information is obtained by compressing at least one piece of second channel information based on one piece of first channel information, the first channel information is referred to as first channel information associated with the piece of compressed information.

The foregoing describes the solutions about the first channel information and the second channel information. The following then describes a solution about obtaining the M pieces of compressed information by the first communication apparatus.

Optionally, in step 401, that the first communication apparatus compresses the N pieces of second channel information based on the X pieces of first channel information to obtain the M pieces of compressed information includes: The first communication apparatus compresses the N pieces of second channel information based on the X pieces of first channel information in an AI manner to obtain the M pieces of compressed information; or the first communication apparatus compresses the N pieces of second channel information based on the X pieces of first channel information in a non-AI manner to obtain the M pieces of compressed information.

In a first possible implementation, the first communication apparatus obtains the M pieces of compressed information in an AI manner. For example, the first communication apparatus compresses the X pieces of first channel information and the N pieces of second channel information by using at least one AI model to obtain the M pieces of compressed information.

For ease of description, second channel information and first channel information that are used to obtain one piece of compressed information are collectively referred to as a channel information subset. For example, the Pᵢ pieces of second channel information and one piece of first channel information that are used to obtain the i^{th} piece of compressed information are collectively referred to as a channel information subset. In other words, M channel information subsets are compressed to obtain the M pieces of compressed information. Based on this implementation, compressing the M channel information subsets to obtain the M pieces of compressed information includes: inputting the M channel information subsets into at least one AI model, where an output of the at least one AI model is the M pieces of compressed information.

In an example, the M channel information subsets are respectively input into M AI models, that is, each channel information subset corresponds to one AI model.

In another example, the M channel information subsets are input into one AI model, that is, the M channel information subsets correspond to one AI model. Different channel information subsets may be input into the AI model at different time.

In another example, the M channel information subsets are input into V AI models, and V is an integer greater than 1 and less than M, that is, at least two of the M channel information subsets correspond to one AI model.

The following provides an example with reference to FIG. 6.

On a first communication apparatus side, it is assumed that the M channel information subsets are respectively input into M AI models. As shown in FIG. 6, the two channel information subsets are respectively input into two AI models (that is, the AI model #2 and the AI model #3) to obtain two pieces of compressed information. One channel information subset includes one piece of second channel information H₁ and one piece of first channel information s. After the channel information subset is input into the AI model #2 in the first communication apparatus, the compressed information c₁ is output. The other channel information subset includes one piece of second channel information H₂ and one piece of first channel information s. After the channel information subset is input into the AI model #3 in the first communication apparatus, the compressed information c₂ is output. s represents first channel information obtained based on two pieces of third channel information {H_{1,his}, H_{2,his}}, c₁ may represent that {H_{1,his}, H_{2,his}} is used as a prior for the second channel information {H₁}, and c₂ may represent that {H_{1,his}, H_{2,his}} is used as a prior for the second channel information {H₂}. Correspondingly, on a second communication apparatus side, the compressed information c₁ and the first channel information s are input into the AI model #4 in the second communication apparatus, and the second channel information H₁' is output, where H₁' is the same as H₁, or H₁' may accurately reflect H₁; and the compressed information c₂ and the first channel information s are input into the AI model #5 in the second communication apparatus, and second channel information H₂' is output, where H₂' is the same as H₂, or H₂' may accurately reflect H₂.

It may be understood that the foregoing is an example for description. This is not limited. For example, the second communication apparatus may alternatively process the M pieces of compressed information by using one AI model. For another example, one channel information subset may include one piece of second channel information and two pieces of third channel information. To be specific, on the first communication apparatus side, two pieces of third channel information and one piece of second channel information are input into the AI model, and compressed information is output. For another example, c₁ is used as an example. The second communication apparatus may input the received compressed information c₁ and the two pieces of third channel information {H_{1,his}, H_{2,his}} into the AI model #4, and the second channel information H₁' is output. In this case, the first communication apparatus may not need to send the first channel information s to the second communication apparatus. The two pieces of third channel information may be obtained through decompression and restoring before the second channel information is decompressed.

In a second possible implementation, the first communication apparatus obtains the M pieces of compressed information in a non-AI manner. For example, the first communication apparatus projects the N pieces of second channel information onto the X pieces of first channel information by using the X pieces of first channel information as a basis to obtain the M pieces of compressed information.

As described above, the second communication apparatus may send the compressed information at different time. Specifically, the second communication apparatus may perform sending based on configuration information of each piece of compressed information.

Optionally, the method 400 further includes: The first communication apparatus receives indication information #2, where the indication information #2 indicates configuration information of each of the M pieces of compressed information, and at least two of the M pieces of compressed information have different configuration information. In an example, the configuration information of each of the M pieces of compressed information includes at least one of the following: feedback time of each piece of compressed information, a feedback periodicity of each piece of compressed information, or a time offset of each piece of compressed information. For the time offset of the compressed information, refer to the foregoing descriptions about the time offset of the reference signal. Details are not described herein again.

As described above, the second communication apparatus determines, based on compressed information and first channel information used to obtain the compressed information, second channel information used to obtain the compressed information. Therefore, the second communication apparatus needs to determine the compressed information and the first channel information associated with the compressed information. The first channel information associated with the compressed information indicates the first channel information used to obtain the compressed information. Specifically, if one piece of compressed information is obtained by compressing at least one piece of second channel information based on one piece of first channel information, the first channel information is referred to as first channel information associated with the piece of compressed information, or the compressed information is associated with the first channel information.

The following describes manners of determining compressed information and first channel information associated with the compressed information.

In a first possible implementation, the first communication apparatus determines compressed information and first channel information associated with the compressed information, and the first communication apparatus sends indication information to the second communication apparatus. The second communication apparatus determines, based on an indication of the first communication apparatus, the compressed information and the first channel information associated with the compressed information.

The i^{th} piece of compressed information is used as an example. It is assumed that the first communication apparatus determines that the i^{th} piece of compressed information is associated with the j^{th} piece of first channel information. In this case, the first communication apparatus compresses the Pᵢ pieces of second channel information based on the j^{th} piece of first channel information to obtain the i^{th} piece of compressed information. Further, the method 400 may include: The first communication apparatus sends indication information #3 to the second communication apparatus, where the indication information #3 indicates that the i^{th} piece of compressed information is associated with the j^{th} piece of first channel information. Based on this, the second communication apparatus may learn, based on the indication information #3, that the i^{th} piece of compressed information is associated with the j^{th} piece of first channel information. In this way, the second communication apparatus may determine the Pᵢ pieces of second channel information based on the i^{th} piece of compressed information and the j^{th} piece of first channel information.

A manner of determining, by the first communication apparatus, that the i^{th} piece of compressed information is associated with the j^{th} piece of first channel information is not limited in embodiments of this application. For example, a time interval between third channel information whose obtaining time is the latest in at least two pieces of third channel information used to obtain the j^{th} piece of first channel information and second channel information whose obtaining time is the earliest in the Pᵢ pieces of second channel information is less than or equal to a threshold. The threshold may be predefined, preconfigured, or pre-agreed on. This is not limited.

In an example, the indication information #3 indicates, in the following several manners, that the i^{th} piece of compressed information is associated with the j^{th} piece of first channel information.

For example, the indication information #3 indicates an effective period of the j^{th} piece of first channel information. However, which one of the M pieces of compressed information is associated with the j^{th} piece of first channel information is not involved, and association is performed in a predefined manner (or a pre-agreed manner or a preconfigured manner). For example, if a sending moment of the i^{th} piece of compressed information is within the effective period of the j^{th} piece of first channel information, or a receiving moment of the i^{th} piece of compressed information is within the effective period of the j^{th} piece of first channel information, it may be considered that the i^{th} piece of compressed information is associated with the j^{th} piece of first channel information.

For another example, the indication information #3 indicates an effective period of the j^{th} piece of first channel information, and further indicates that the j^{th} piece of first channel information is associated with the i^{th} piece of compressed information. If a sending moment of the i^{th} piece of compressed information is within the effective period of the j^{th} piece of first channel information, or a receiving moment of the i^{th} piece of compressed information is within the effective period of the j^{th} piece of first channel information, it may be considered that the i^{th} piece of compressed information is associated with the j^{th} piece of first channel information. In this case, if that the j^{th} piece of first channel information is associated with a k^{th} piece of compressed information is not indicated, even if a sending moment or a receiving moment of the k^{th} piece of compressed information is within the effective period of the j^{th} piece of first channel information, the j^{th} piece of first channel information is still not associated with the k^{th} piece of compressed information, where a value of k is not equal to i.

For another example, the indication information #3 indicates an effective period in which the j^{th} piece of first channel information is used for the i^{th} piece of compressed information. For example, the j^{th} piece of first channel information is associated with the i^{th} piece of compressed information, namely, a 2^{nd} piece of compressed information, and the j^{th} piece of first channel information is associated with the i^{th} piece of compressed information, namely, a 3^{rd} piece of compressed information. In addition, for the second communication apparatus, receiving time of the 2^{nd} piece of compressed information is different from that of the 3^{rd} piece of compressed information (or for the first communication apparatus, sending time of the 2^{nd} piece of compressed information is different from that of the 3^{rd} piece of compressed information). Therefore, for the 2^{nd} piece of compressed information and the 3^{rd} piece of compressed information, the second communication apparatus uses the j^{th} piece of first channel information at different time. Therefore, the indication information may indicate an effective period in which the j^{th} piece of first channel information is used for each piece of compressed information.

For another example, the indication information #3 indicates a time domain offset threshold between the j^{th} piece of first channel information and the i^{th} piece of compressed information (in other words, a time domain offset threshold or a time difference between the i^{th} piece of compressed information and the first channel information that can be used for the i^{th} piece of compressed information). For example, the indication information #3 indicates that the time domain offset threshold between the j^{th} piece of first channel information and the i^{th} piece of compressed information is Δ. If a difference between receiving time of the j^{th} piece of first channel information and receiving time of the i^{th} piece of compressed information is less than or equal to Δ, the j^{th} piece of first channel information is associated with the i^{th} piece of compressed information.

In an example, the indication information #3 indicates at least one of the following of the effective period of the j^{th} piece of first channel information: a start moment, an end moment, or a time length.

For example, the indication information #3 indicates the start moment of the effective period of the j^{th} piece of first channel information. In this case, the time length of the effective period may be predefined or preconfigured. In this way, the second communication apparatus may determine the effective period of the j^{th} piece of first channel information based on the start moment of the effective period of the j^{th} piece of first channel information indicated by the indication information #3 and the predefined time length.

For another example, the indication information #3 indicates the end moment of the effective period of the j^{th} piece of first channel information. In this case, the time length of the effective period may be predefined or preconfigured. In this way, the second communication apparatus may determine the effective period of the j^{th} piece of first channel information based on the end moment of the effective period of the j^{th} piece of first channel information indicated by the indication information #3 and the predefined time length.

For another example, the indication information #3 indicates the start moment and the time length of the effective period of the j^{th} piece of first channel information. In this case, the second communication apparatus may determine the effective period of the j^{th} piece of first channel information based on the start moment and the time length of the effective period of the j^{th} piece of first channel information that are indicated by the indication information #3.

For another example, the indication information #3 indicates the end moment and the time length of the effective period of the j^{th} piece of first channel information. In this case, the second communication apparatus may determine the effective period of the j^{th} piece of first channel information based on the end moment and the time length of the effective period of the j^{th} piece of first channel information that are indicated by the indication information #3.

For another example, the indication information #3 indicates the start moment, the end moment, and the time length of the effective period of the j^{th} piece of first channel information. In this case, the second communication apparatus may determine the effective period of the j^{th} piece of first channel information based on the start moment, the end moment, and the time length of the effective period of the j^{th} piece of first channel information that are indicated by the indication information #3.

In a second possible implementation, an association relationship between compressed information and first channel information is predefined or preconfigured. In this way, the second communication apparatus may determine, based on the predefined or preconfigured association relationship, compressed information and first channel information associated with the compressed information.

For example, all of the M pieces of compressed information are associated with a same piece of first channel information. In this case, after receiving compressed information, the second communication apparatus may determine, based on first channel information (for example, recently received first channel information) received by the second communication apparatus and the compressed information, second channel information used to obtain the compressed information.

For another example, different compressed information in the M pieces of compressed information is associated with different first channel information. In this case, it may be assumed that the i^{th} piece of compressed information is associated with an *x*^{th} piece of first channel information, where *x* is an integer greater than or equal to 1 and less than or equal to X. For example, *x*=i. For example, a 1^{st} piece of compressed information is associated with a 1^{st} piece of first channel information, a 2^{nd} piece of compressed information is associated with a 2^{nd} piece of first channel information, and so on.

For another example, a time interval between obtaining time of second channel information used to obtain compressed information and obtaining time of third channel information used to obtain first channel information is less than or equal to a threshold. For example, the Pᵢ pieces of second channel information are compressed based on the j^{th} piece of first channel information to obtain the i^{th} piece of compressed information, where the j^{th} piece of first channel information is obtained based on at least two pieces of third channel information. A time interval between third channel information whose obtaining time is the latest in the at least two pieces of third channel information and second channel information whose obtaining time is the earliest in the Pᵢ pieces of second channel information is less than or equal to the threshold. The threshold may be predefined, preconfigured, or pre-agreed on. This is not limited.

In a third possible implementation, the second communication apparatus determines compressed information and first channel information associated with the compressed information, and the second communication apparatus sends indication information to the first communication apparatus. The first communication apparatus determines, based on an indication of the second communication apparatus, second channel information and first channel information associated with the second channel information, and then determines compressed information based on the first channel information and the second channel information.

For this implementation, refer to the first possible implementation. Details are not described herein again.

It may be understood that the foregoing descriptions are several possible implementations. This is not limited herein. Any variation that belongs to the foregoing implementations is applicable to embodiments of this application. For example, in the foregoing implementations, an example in which the compressed information is associated with the first channel information is used for description, and the example may be replaced with that the compressed information is associated with the third channel information. For example, the first possible implementation is used as an example. The first communication apparatus determines compressed information and third channel information associated with the compressed information, and the first communication apparatus sends indication information to the second communication apparatus. The second communication apparatus determines, based on an indication of the first communication apparatus, the compressed information and the third channel information associated with the compressed information. Further, the second communication apparatus may restore, based on the received compressed information and the third channel information that is restored before second channel information is decompressed, the second channel information corresponding to the compressed information. It may be understood that, in this case, initial third channel information may be preset known information.

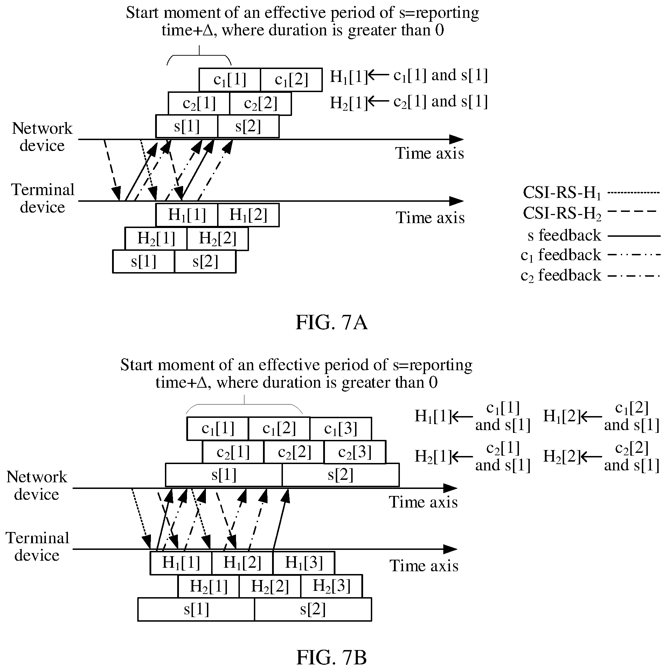

For ease of understanding, the following mainly uses the first implementation as an example to provide some specific examples with reference to FIG. 7A and FIG. 7B to FIG. 13.

In the following examples, it is assumed that the first communication apparatus is a terminal device, the second communication apparatus is a network device, and the terminal device indicates the association relationship between compressed information and first channel information to the network device.

In the following examples, it is assumed that N=2, to be specific, there is second channel information of two channels, and the second channel information of the two channels is respectively H₁ and H₂; X=1, to be specific, there is one piece of first channel information, and the piece of first channel information is s; and M=2, to be specific, there are two pieces of compressed information, and the two pieces of compressed information are respectively c₁ and c₂. Specifically, the terminal device may compress the second channel information H₁ based on the first channel information s to obtain the compressed information c₁, and compress the second channel information H₂ based on the first channel information s to obtain the compressed information c₂. The following describes the several examples.

Example 1: It is assumed that reference signals corresponding to the N pieces of second channel information have a same periodicity value.

FIG. 7A and FIG. 7B are diagrams of relationships between compressed information and first channel information applicable to an embodiment of this application.

As shown in FIG. 7A and FIG. 7B, it is assumed that reference signals used to obtain second channel information are periodically sent, and have a same periodicity value. Specifically, H₁[1], H₁[2], and H₁[3] represent channel information obtained by the terminal device by performing channel measurement based on reference signals (that is, CSI-RS-H₁) received at different time. For example, H₁[1] is channel information obtained by the terminal device by performing channel measurement based on CSI-RS-H₁ received in a 1^{st} periodicity, H₁[2] is channel information obtained by the terminal device by performing channel measurement based on CSI-RS-H₁ received in a 2^{nd} periodicity, and H₁[3] is channel information obtained by the terminal device by performing channel measurement based on CSI-RS-H₁ received in a 3^{rd} periodicity. Similarly, H₂[1], H₂[2], and H₂[3] represent channel information obtained by the terminal device by performing channel measurement based on reference signals (that is, CSI-RS-H₂) received at different time. For example, H₂[1] is channel information obtained by the terminal device by performing channel measurement based on CSI-RS-H₂ received in the 1^{st} periodicity, H₂[2] is channel information obtained by the terminal device by performing channel measurement based on CSI-RS-H₂ received in the 2^{nd} periodicity, and H₂[3] is channel information obtained by the terminal device by performing channel measurement based on CSI-RS-H₂ received in the 3^{rd} periodicity.

s[1], s[2], and s[3] represent first channel information determined based on third channel information obtained at different time.

For example, s[1] is used as an example. Obtaining time of s[1] is earlier than obtaining time of H₁[1] and obtaining time of H₂[1]. For example, the terminal device performs measurement based on reference signals in a first time period to obtain third channel information (for example, denoted as H_{1,his}[1]) of a channel corresponding to H₁ and third channel information (for example, denoted as H_{2,his}[1]) of a channel corresponding to H₂, and the terminal device determines s[1] based on H_{1,his}[1] and H_{2,his}[1]. An end moment of the first time period is earlier than a sending moment of the reference signal CSI-RS-H₁ corresponding to H₁[1] and a sending moment of the reference signal CSI-RS-H₂ corresponding to H₂[1].

For another example, s[2] is used as an example. Obtaining time of s[2] is later than obtaining time of s[1], and is earlier than obtaining time of H₁[2] and obtaining time of H₂[2]. For example, the terminal device performs measurement based on reference signals in a second time period to obtain third channel information (for example, denoted as H_{1,his}[2]) of a channel corresponding to H₁ and third channel information (for example, denoted as H_{2,his}[2]) of a channel corresponding to H₂, and the terminal device determines s[2] based on H_{1,his}[2] and H_{2,his}[2]. An end moment of the second time period is earlier than a sending moment of the reference signal CSI-RS-H₁ corresponding to H₁[2] and a sending moment of the reference signal CSI-RS-H₂ corresponding to H₂[2].

For another example, s[3] is used as an example. Obtaining time of s[3] is later than obtaining time of s[2], and is earlier than obtaining time of H₁[3] and obtaining time of H₂[3]. For example, the terminal device performs measurement based on reference signals in a third time period to obtain third channel information (for example, denoted as H_{1,his}[3]) of a channel corresponding to H₁ and third channel information (for example, denoted as H_{2,his}[3]) of a channel corresponding to H₂, and the terminal device determines s[3] based on H_{1,his}[3] and H_{2,his}[3]. An end moment of the third time period is earlier than a sending moment of the reference signal CSI-RS-H₁ corresponding to H₁[3] and a sending moment of the reference signal CSI-RS-H₂ corresponding to H₂[3].

(1) The second channel information H₁[1] and the second channel information H₂[1] in the 1^{st} periodicity are used as an example.

Specifically, as shown in FIG. 7A or FIG. 7B, after receiving the reference signal (that is, CSI-RS-H₁) corresponding to the second channel information H₁[1], the terminal device performs channel measurement based on the reference signal to obtain the second channel information H₁[1], and then the terminal device may jointly compress the second channel information H₁[1] and the first channel information s[1] to obtain compressed information c₁[1]. The terminal device sends the first channel information s[1] and the compressed information c₁[1] to the network device. In this way, the network device may determine the second channel information H₁[1] based on the compressed information c₁[1] and the first channel information s[1]. Similarly, after receiving the reference signal (that is, CSI-RS-H₂) corresponding to the second channel information H₂[1], the terminal device performs channel measurement based on the reference signal to obtain the second channel information H₂[1], and then the terminal device may jointly compress the second channel information H₂[1] and the first channel information s[1] to obtain compressed information c₂[1]. The terminal device sends the compressed information c₂[1] to the network device. In this way, the network device may determine the second channel information H₂[1] based on the compressed information c₂[1] and the previously received first channel information s[1].

The terminal device may send the first channel information s[1] when sending the compressed information c₁[1], or may send the first channel information s[1] before sending the compressed information c₁[1], or may send the first channel information s[1] after sending the compressed information c₁[1]. This is not limited.

In an example, the terminal device sends indication information #3 to the network device, where the indication information #3 indicates an effective period of the first channel information s (for example, s[1], s[2], or s[3]). For a specific indication manner, refer to the foregoing descriptions. It is assumed that a receiving moment of compressed information is within an effective period of first channel information. In this case, it is considered that the compressed information is associated with the first channel information. s[1] is used as an example. For example, if the network device determines the effective period of s[1] based on the indication information #3, and the network device receives the compressed information c₁[1] within the effective period of s[1], the network device may determine that c₁[1] is associated with s[1], and therefore determine H₁[1] based on c₁[1] and s[1]. Similarly, if the network device receives the compressed information c₂[1] within the effective period of s[1], the network device may determine that c₂[1] is associated with s[1], and therefore determine H₂[1] based on c₂[1] and s[1].

Considering that sending time of the compressed information c₁ and/or sending time of c₂ may be later than sending time of s (for example, s[1], s[2], or s[3]), a time length of the effective period of s may be greater than 0. In addition, a start moment of the effective period of the first channel information s is: a reporting moment of the first channel information s+Δ, where Δ is greater than or equal to 0, and the time length of the effective period of s is greater than 0.

(2) The second channel information H₁[2] and the second channel information H₂[2] in the 2^{nd} periodicity are used as an example.

For example, as shown in FIG. 7A, after receiving the reference signal (that is, CSI-RS-H₁) corresponding to the second channel information H₁[2], the terminal device performs channel measurement based on the reference signal to obtain the second channel information H₁[2], and then the terminal device may jointly compress the second channel information H₁[2] and the first channel information s[2] to obtain compressed information c₁[2]. The terminal device sends the first channel information s[2] and the compressed information c₁[2] to the network device. In this way, the network device may determine the second channel information H₁[2] based on the compressed information c₁[2] and the first channel information s[2]. Similarly, after receiving the reference signal (that is, CSI-RS-H₂) corresponding to the second channel information H₂[2], the terminal device performs channel measurement based on the reference signal to obtain the second channel information H₂[2], and then the terminal device may jointly compress the second channel information H₂[2] and the first channel information s[2] to obtain compressed information c₂[2]. The terminal device sends the compressed information c₂[2] to the network device. In this way, the network device may determine the second channel information H₂[2] based on the compressed information c₂[2] and the previously received first channel information s[2].

The terminal device may send the first channel information s[2] when sending the compressed information c₁[2], or may send the first channel information s[2] before sending the compressed information c₁[2], or may send the first channel information s[2] after sending the compressed information c₁[2]. This is not limited.

In an example, the terminal device sends indication information #3 to the network device, where the indication information #3 indicates an effective period of the first channel information s[2]. For details, refer to the related descriptions in (1). Details are not described herein again.

For another example, as shown FIG. 7B, after receiving the reference signal (that is, CSI-RS-H₁) corresponding to the second channel information H₁[2], the terminal device performs channel measurement based on the reference signal to obtain the second channel information H₁[2], and then the terminal device may jointly compress the second channel information H₁[2] and the first channel information s[1] to obtain compressed information c₁[2]. The terminal device sends the first channel information s[1] and the compressed information c₁[2] to the network device. In this way, the network device may determine the second channel information H₁[2] based on the compressed information c₁[2] and the first channel information s[1]. Similarly, after receiving the reference signal (that is, CSI-RS-H₂) corresponding to the second channel information H₂[2], the terminal device performs channel measurement based on the reference signal to obtain the second channel information H₂[2], and then the terminal device may jointly compress the second channel information H₂[2] and the first channel information s[1] to obtain compressed information c₂[2]. The terminal device sends the compressed information c₂[2] to the network device. In this way, the network device may determine the second channel information H₂[2] based on the compressed information c₂[2] and the previously received first channel information s[1].

In an example, the terminal device sends indication information #3 to the network device, where the indication information #3 indicates an effective period of the first channel information s[1]. For details, refer to the related descriptions in (1). Details are not described herein again.

It can be learned that, compared with FIG. 7A, in FIG. 7B, a time length of the effective period of the first channel information is longer. Therefore, the first channel information s[1] in FIG. 7A is used to compress the second channel information in the 1^{st} periodicity, and the first channel information s[1] in FIG. 7B may be used to compress the second channel information in a plurality of periodicities (for example, the second channel information in the 1^{st} periodicity and the 2^{nd} periodicity).

It may be understood that FIG. 7A and FIG. 7B are examples for description. This is not limited.

Example 2: It is assumed that reference signals corresponding to the N pieces of second channel information have different periodicity values, or the reference signals corresponding to the N pieces of second channel information are aperiodic.

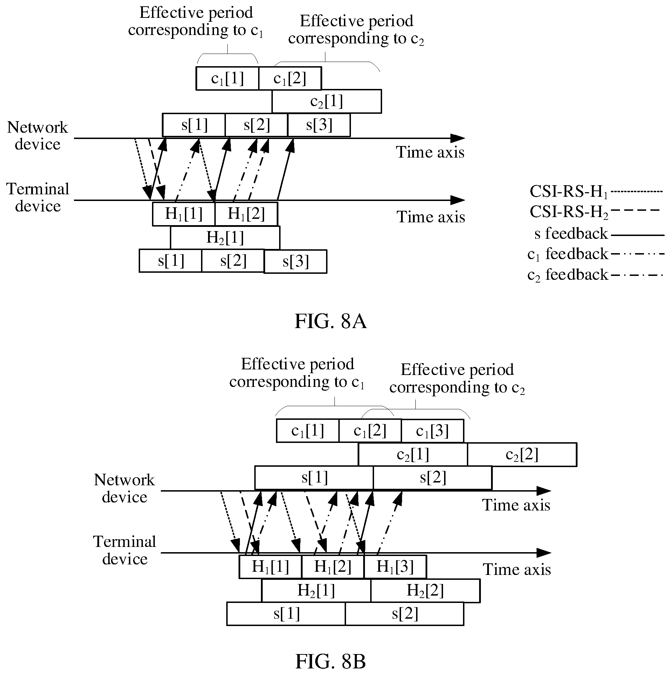

FIG. 8A and FIG. 8B are other diagrams of relationships between compressed information and first channel information applicable to an embodiment of this application. For meanings of parameters in FIG. 8A and FIG. 8B, refer to the descriptions in FIG. 7A and FIG. 7B. Details are not described herein again.

As shown in FIG. 8A and FIG. 8B, a periodicity value of a reference signal (that is, CSI-RS-H₁) corresponding to second channel information H₁ is different from a periodicity value of a reference signal (that is, CSI-RS-H₂) corresponding to second channel information H₂. Therefore, obtaining time of H₁ is also different from obtaining time of H₂. Correspondingly, sending time of compressed information (that is, c₁) corresponding to H₁ is also different from sending time of compressed information (that is, c₂) corresponding to H₂. Sending time of different compressed information is different. Therefore, for different compressed information, time for using first channel information s is also different. Therefore, an effective period of associated first channel information s may be defined for each piece of compressed information.

In an example, the terminal device sends indication information #3 to the network device, where the indication information #3 indicates two effective periods of the first channel information s (for example, s[1], s[2], or s[3]), for example, respectively denoted as an effective period #1 and an effective period #2. The effective period #1 corresponds to the compressed information c₁, in other words, a receiving moment of the compressed information c₁ is within the effective period #1; and the effective period #2 corresponds to the compressed information c₂, in other words, a receiving moment of the compressed information c₂ is within the effective period #2. Specifically, the network device determines the effective period #1 and the effective period #2 of s based on the indication information #3. If the network device receives the compressed information c₁ within the effective period #1, the network device may determine that c₁ is associated with s, and therefore determine H₁ based on c₁ and s. If the network device receives the compressed information c₂ within the effective period #2 of s, the network device may determine that c₂ is associated with s, and therefore determine H₂ based on c₂ and s.

A difference between FIG. 8A and FIG. 8B lies in that, compared with FIG. 8A, in FIG. 8B, a time length of the effective period of the first channel information is longer. Therefore, the first channel information s[1] in FIG. 8A is used to compress second channel information in a 1^{st} periodicity, and the first channel information s[1] in FIG. 8B may be used to compress second channel information in a plurality of periodicities (for example, the second channel information in the 1^{st} periodicity and a 2^{nd} periodicity).

For FIG. 8A and FIG. 8B, refer to the descriptions in FIG. 7A and FIG. 7B. Details are not described herein again. A difference between the examples shown in FIG. 8A and FIG. 8B and the examples shown in FIG. 7A and FIG. 7B lies in that, in the examples shown in FIG. 7A and FIG. 7B, the indication information #3 indicates one effective period of the first channel information s (for example, s[1], s[2], or s[3]), and the effective period corresponds to the compressed information c₁ and c₂; in the examples shown in FIG. 8A and FIG. 8B, the indication information #3 indicates two effective periods of the first channel information s (for example, s[1], s[2], or s[3]), one effective period corresponds to the compressed information c₁, and the other effective period corresponds to the compressed information c₂. An effective period corresponds to compressed information, indicating that a receiving moment of the compressed information is within the effective period.

It may be understood that FIG. 8A and FIG. 8B are examples for description. This is not limited.

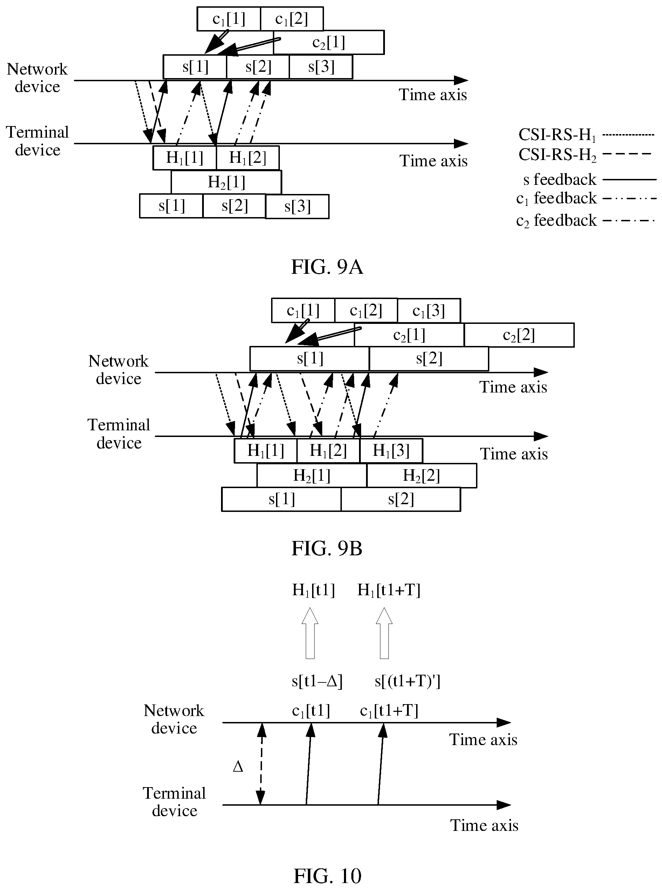

FIG. 9A and FIG. 9B are other diagrams of relationships between compressed information and first channel information applicable to an embodiment of this application. For meanings of parameters in FIG. 9A and FIG. 9B, refer to the descriptions in FIG. 7A and FIG. 7B. Details are not described herein again.

As shown in FIG. 9A and FIG. 9B, a periodicity value of a reference signal (that is, CSI-RS-H₁) corresponding to second channel information H₁ is different from a periodicity value of a reference signal (that is, CSI-RS-H₂) corresponding to second channel information H₂. Therefore, obtaining time of H₁ is also different from obtaining time of H₂. Correspondingly, sending time of compressed information (that is, c₁) corresponding to H₁ is also different from sending time of compressed information (that is, c₂) corresponding to H₂. Sending time of different compressed information is different. Therefore, for different compressed information, time for using first channel information s is also different. Therefore, associated first channel information s may be defined for each piece of compressed information. For example, as shown in FIG. 9A and FIG. 9B, first channel information associated with the compressed information c₁[1] is s[1], and first channel information associated with compressed information c₂[1] is s[1]. Therefore, the network device determines second channel information H₁[1] based on c₁[1] and s[1], and determines second channel information H₂[1] based on c₂[1] and s[1]. In a possible implementation, the terminal device sends indication information #4 to the network device, where the indication information #4 indicates the first channel information associated with each piece of compressed information. Correspondingly, the network device receives the indication information #4, and determines, based on the indication information #4, the first channel information associated with each piece of compressed information. In another possible implementation, the first channel information associated with each piece of compressed information is pre-agreed on. For example, first channel information associated with one piece of compressed information is pre-agreed as the last piece of first channel information received before the compressed information.

The following uses one piece of compressed information (for example, c₁) as an example to describe, with reference to several scenarios, a specific implementation in which the terminal device indicates that the compressed information is associated with the first channel information.

Scenario 1: The compressed information is periodic or semi-static.

In a possible implementation, if the first channel information is periodic or semi-static, compressed information fed back at a moment t is associated with the last piece of first channel information fed back in a time period #1. It may be understood that the "moment t" indicates a moment at which the compressed information is received or sent, and is not limited to a particular moment. A start moment of the time period #1 is t, and duration is Δ; or an end moment of the time period #1 is t, and duration is Δ. Further, optionally, if a value of Δ is not updated in a period of time, the association relationship between compressed information and first channel information is always determined in the period of time according to the foregoing rule (to be specific, the compressed information fed back at the moment t is associated with the last piece of first channel information fed back in the time period #1).

That "the compressed information c₁[t] fed back at the moment t is associated with the last piece of first channel information s fed back in the time period #1" may be predefined, pre-agreed on, or preconfigured, or may be indicated by the terminal device to the network device. This is not limited herein. In addition, Δ may be predefined, pre-agreed on, or preconfigured, or may be indicated by the terminal device to the network device (for example, indicated by using the indication information #3). This is not limited herein.

FIG. 10 is another diagram of a relationship between compressed information and first channel information applicable to an embodiment of this application.

As shown in FIG. 10, the network device receives compressed information c₁[t1] at a moment t1, and the network device may determine second channel information based on c₁[t1] and first channel information received in time (t1-Δ). For example, the network device may determine second channel information H₁[t1] based on c₁[t1] and first channel information s[t1'] obtained at a moment t1'. A time interval between the moment t1' and the moment t1 is less than or equal to Δ. The network device receives compressed information c₁[t1+T] at a moment (t1+T), and the network device may determine second channel information based on c₁[t1+T] and first channel information received in time (t1+T-Δ). For example, the network device may determine second channel information H₁[t1+T] based on c₁[t1+T] and first channel information s[(t1+T)'] obtained at a moment (t1+T)'. A time interval between the moment (t1+T)' and the moment (t1+T) is less than or equal to Δ. Δ may be indicated by the terminal device before the moment t1, or may be predefined, preconfigured, or pre-agreed on.

In another possible implementation, if the first channel information is aperiodic, compressed information fed back at a moment t is associated with first channel information that is triggered by using a specific piece of signaling for feedback. "A specific piece of signaling" may indicate signaling used by the terminal device to send the first channel information to the network device, or may indicate signaling used by the network device to indicate the terminal device to send the first channel information. It may be understood that the "moment t" indicates a moment at which the compressed information is received or sent, and is not limited to a particular moment. Further, optionally, if the association relationship between compressed information and first channel information is not updated in a period of time, the association relationship between compressed information and first channel information is always determined in the period of time according to the foregoing rule (to be specific, the compressed information fed back at the moment t is associated with the first channel information that is triggered by using a specific piece of signaling for feedback).

That "the compressed information fed back at the moment t is associated with the first channel information that is triggered by using a specific piece of signaling for feedback" may be predefined, pre-agreed on, or preconfigured, or may be indicated by the terminal device to the network device. This is not limited herein.

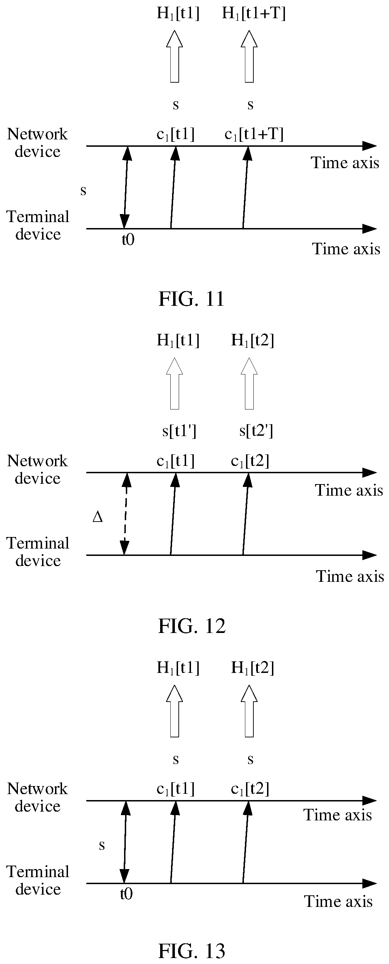

FIG. 11 is another diagram of a relationship between compressed information and first channel information applicable to an embodiment of this application.

As shown in FIG. 11, the terminal device indicates first channel information s at a moment t0, the network device receives compressed information c₁[t1] at a moment t1, and the network device may determine second channel information H₁[t1] based on c₁[t1] and s received at the moment t0. The network device receives compressed information c₁[t1+T] at a moment (t1+T). Because no signaling is triggered to indicate the first channel information between the moment t and the moment (t1+T), the network device may determine second channel information H₁[t1+T] based on c₁[t1+T] and the first channel information s received at the moment t0.

Scenario 2: The compressed information is aperiodic.

In a possible implementation, if the first channel information is periodic or semi-static, compressed information fed back at a moment t is associated with the last piece of first channel information fed back in a time period #1. For this manner, refer to the related descriptions in Scenario 1. Details are not described herein again.

FIG. 12 is another diagram of a relationship between compressed information and first channel information applicable to an embodiment of this application.

As shown in FIG. 12, the network device receives compressed information c₁[t1] at a moment t1, and the network device may determine second channel information based on c₁[t1] and first channel information received in time (t1-Δ). For example, the network device may determine second channel information H₁[t1] based on c₁[t1] and first channel information s[t1'] obtained at a moment t1'. A time interval between the moment t1' and the moment t1 is less than or equal to Δ. The network device receives compressed information c₁[t2] at a moment t2, and the network device may determine second channel information based on c₁[t2] and first channel information s received in time (t2-Δ). For example, the network device may determine second channel information H₁[t2] based on c₁[t2] and first channel information s[t2'] obtained at a moment t2'. A time interval between the moment t2' and the moment t2 is less than or equal to Δ. Δ may be indicated by the terminal device before the moment t1, or may be predefined, preconfigured, or pre-agreed on.

In another possible implementation, if the first channel information is aperiodic, compressed information fed back at a moment t is associated with first channel information that is triggered by using a specific piece of signaling for feedback. For this manner, refer to the related descriptions in Scenario 1. Details are not described herein again.

FIG. 13 is another diagram of a relationship between compressed information and first channel information applicable to an embodiment of this application.

As shown in FIG. 13, the terminal device indicates first channel information s at a moment t0, the network device receives compressed information c₁[t1] at a moment t1, and the network device may determine second channel information H₁[t1] based on c₁[t1] and s received at the moment t0. The network device receives compressed information c₁[t2] at a moment t2. Because no signaling is triggered to indicate the first channel information between the moment t1 and the moment t2, the network device may determine second channel information H₁[t2] based on c₁[t2] and the first channel information s received at the moment t0.

The foregoing describes in detail the association relationship between compressed information and first channel information with reference to FIG. 7A and FIG. 7B to FIG. 13. It may be understood that the foregoing is an example for description, and this embodiment of this application is not limited thereto. For example, a quantity of pieces of second channel information may be greater than 2. For another example, a plurality of pieces of second channel information may be jointly compressed with one piece of first channel information to obtain one piece of compressed information.

The foregoing separately describes the solutions in this application, for example, the solution about the second channel information, the solution about the first channel information, the solution about the compressed information, and the solution about the association relationship between compressed information and first channel information. It may be understood that the foregoing solutions may be used separately or in combination. This is not limited herein. For ease of understanding, the following uses an example in which the first communication apparatus is a terminal device and the second communication apparatus is a network device to describe a specific procedure in which the foregoing solutions are used together. For content that is not described in detail below, refer to the descriptions in the method 400. Details are not described below again.

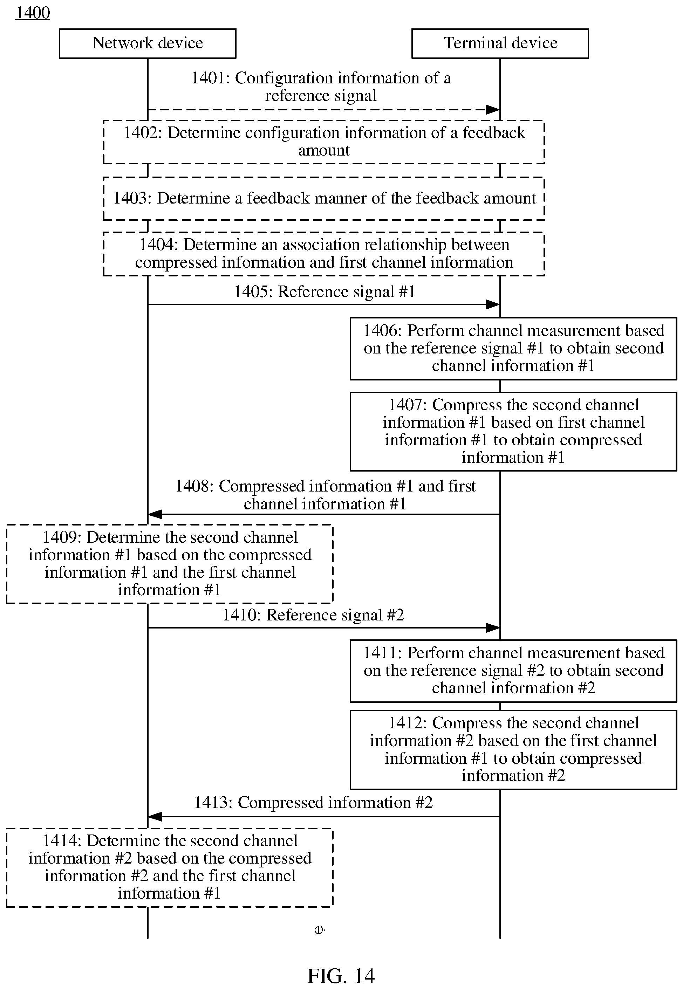

FIG. 14 is a schematic flowchart applicable to an embodiment of this application.

Optionally, the method 1400 includes step 1401.

1401: A network device sends configuration information of a reference signal to a terminal device. Correspondingly, the terminal device receives the configuration information of the reference signal.

Specifically, the network device sends configuration information of N reference signals to the terminal device, where the N reference signals are reference signals corresponding to N pieces of second channel information. In this way, the terminal device may receive the N reference signals based on the configuration information, and then perform channel measurement based on the received N reference signals to obtain the N pieces of second channel information. The reference signal is a downlink reference signal, for example, a CSI-RS or a DMRS.

In an example, the configuration information of the reference signal includes at least one of the following: a periodicity of the reference signal, a periodicity value of the reference signal, or a time offset of the reference signal.

For step 1401, refer to the related descriptions of the solution about the second channel information in the method 400. Details are not described herein again.

Optionally, the method 1400 includes step 1402.

1402: Determine configuration information of a feedback amount.

The feedback amount includes compressed information and/or first channel information.

In an example, the feedback amount includes the compressed information.

In this example, for example, configuration information of the compressed information includes at least one of the following: feedback time of the compressed information, a feedback periodicity of the compressed information, a time offset of the compressed information, or second channel information corresponding to the compressed information. The second channel information corresponding to the compressed information may be used to determine which pieces of second channel information in the N pieces of second channel information are jointly compressed. For example, if second channel information corresponding to one piece of compressed information (for example, denoted as c) includes second channel information #1 and second channel information #2, the terminal device needs to compress the second channel information #1 and the second channel information #2 based on one piece of first channel information to obtain the compressed information c. For the feedback time of the compressed information, the feedback periodicity of the compressed information, and the time offset of the compressed information, refer to the related descriptions of the solution about the compressed information in the method 400. Details are not described herein again.

In this example, configuration information of the first channel information may be, for example, predefined, preconfigured, or pre-agreed on. This is not limited.

In another example, the feedback amount includes the first channel information. In this example, for example, configuration information of the first channel information includes at least one of the following: a quantity of pieces of first channel information, feedback time of the first channel information, a feedback periodicity of the first channel information, or a time offset of the first channel information. For example, if the quantity of first channels is X, it indicates that the N pieces of second channel information are compressed by using X pieces of first channel information. For the feedback time of the first channel information, the feedback periodicity of the first channel information, and the time offset of the first channel information, refer to the feedback time of the compressed information, the feedback periodicity of the compressed information, and the time offset of the compressed information. Details are not described herein again.

In this example, configuration information of the compressed information may be, for example, predefined, preconfigured, or pre-agreed on. This is not limited.

In another example, the feedback amount includes the first channel information and the compressed information. For details, refer to the foregoing two examples. Details are not described herein again.

Optionally, step 1402 includes the following implementations.

In a first possible implementation, the network device determines the configuration information of the feedback amount, and sends indication information to the terminal device, where the indication information indicates the configuration information of the feedback amount; and the terminal device determines the configuration information of the feedback amount based on the indication information.

In another possible implementation, the terminal device determines the configuration information of the feedback amount, and sends indication information to the network device, where the indication information indicates the configuration information of the feedback amount; and the network device determines the configuration information of the feedback amount based on the indication information.

Optionally, the method 1400 further includes 1403.

1403: Determine a feedback manner of the feedback amount.

The feedback manner of the feedback amount includes a feedback manner of the compressed information and/or a feedback manner of the first channel information. The feedback manner is any one of the following: periodic, aperiodic, or semi-static feedback.

In an example, the feedback manner of the feedback amount includes the feedback manner of the compressed information.

For example, assuming that one piece of compressed information is obtained by compressing n pieces of second channel information based on one piece of first channel information, where n is an integer greater than or equal to 1 and less than or equal to N, a feedback manner of the compressed information is related to a periodicity of reference signals corresponding to the n pieces of second channel information.

For example, if a reference signal corresponding to second channel information in the n pieces of second channel information is aperiodic, the feedback manner of the compressed information is aperiodic feedback.

For another example, if a reference signal corresponding to second channel information in the n pieces of second channel information is semi-static, the feedback manner of the compressed information should be aperiodic or semi-static feedback. In addition, when the feedback manner of the compressed information is semi-static feedback, a periodicity value of the compressed information is greater than or equal to a largest value in periodicity values of the reference signals corresponding to all of the n pieces of second channel information.

For another example, if the reference signals corresponding to all of the n pieces of second channel information are periodic, the feedback manner of the compressed information should be aperiodic, semi-static, or periodic feedback. In addition, when the feedback manner of the compressed information is semi-static or periodic feedback, a periodicity value of the compressed information is greater than or equal to a largest value in delivery periodicities of the reference signals corresponding to all of the n pieces of second channel information.

In this example, the feedback manner of the first channel information may be, for example, predefined, preconfigured, or pre-agreed on. This is not limited.

In another example, the feedback manner of the feedback amount includes the feedback manner of the first channel information.

For example, the terminal device periodically or semi-statically sends the first channel information.

For another example, the terminal device sends the first channel information to a second communication apparatus based on a request of the network device.

For another example, the terminal device actively sends the first channel information to the network device. For example, when sending compressed information to the network device, the terminal device sends, to the network device, first channel information associated with the compressed information. For another example, before compressing at least one piece of second channel information based on one piece of first channel information, the terminal device sends the first channel information to the network device.

In this example, the feedback manner of the compressed information may be, for example, predefined, preconfigured, or pre-agreed on. This is not limited.

In another example, the feedback manner of the feedback amount includes the feedback manner of the compressed information and the feedback manner of the first channel information. For details, refer to the foregoing two examples. Details are not described herein again.

Optionally, step 1403 includes the following implementations.

In a first possible implementation, the network device determines the feedback manner of the feedback amount, and sends indication information to the terminal device, where the indication information indicates the feedback manner of the feedback amount; and the terminal device determines the feedback manner of the feedback amount based on the indication information.

In another possible implementation, the terminal device determines the feedback manner of the feedback amount, and sends indication information to the network device, where the indication information indicates the feedback manner of the feedback amount; and the network device determines the feedback manner of the feedback amount based on the indication information.

In another possible implementation, the terminal device and the network device separately determine the feedback manner of the feedback amount. For example, the terminal device and the network device determine the feedback manner based on the configuration information in step 1402.

Optionally, the method 1400 includes step 1404.

1404: Determine an association relationship between compressed information and first channel information.

The network device may restore channel information based on the association relationship between compressed information and first channel information. Specifically, the network device may determine second channel information based on compressed information and first channel information associated with the compressed information.

The terminal device may determine, based on the association relationship between compressed information and first channel information, which piece of first channel information is used to compress second channel information to obtain corresponding compressed information. For example, it is assumed that second channel information corresponding to compressed information c is n pieces of second channel information, and the compressed information c is associated with first channel information #1. In this case, the terminal device may compress the n pieces of second channel information based on the first channel information #1 to obtain the compressed information c.

Optionally, step 1404 includes the following implementations.

In a first possible implementation, the network device determines the association relationship between compressed information and first channel information, and sends indication information to the terminal device, where the indication information indicates the association relationship between compressed information and first channel information; and the terminal device determines the association relationship between compressed information and first channel information based on the indication information.

In another possible implementation, the terminal device determines the association relationship between compressed information and first channel information, and sends indication information to the network device, where the indication information indicates the association relationship between compressed information and first channel information; and the network device determines the association relationship between compressed information and first channel information based on the indication information.

In another possible implementation, the association relationship between compressed information and first channel information is predefined, pre-agreed on, or preconfigured.

For a related solution of associating the compressed information with the first channel information, refer to the related descriptions in the method 400. Details are not described herein again.

1405: The network device sends a reference signal #1 to the terminal device.

1406: The terminal device performs channel measurement based on the reference signal #1 to obtain second channel information #1.

1407: The terminal device compresses the second channel information #1 based on first channel information #1 to obtain compressed information #1.

For example, the compressed information #1 includes information in the second channel information #1 other than the first channel information #1, or channel information that is in the second channel information #1 and that is the same as the first channel information #1 is not carried in the compressed information #1.

1408: The terminal device sends the compressed information #1 and the first channel information #1.

It may be understood that in FIG. 14, an example in which the terminal device simultaneously sends the compressed information #1 and the first channel information #1 is used for description. This is not limited herein. For example, the terminal device may alternatively first send the first channel information #1, and then send the compressed information #1.

Optionally, the method 1400 further includes step 1409.

1409: The network device determines the second channel information #1 based on the compressed information #1 and the first channel information #1.

1410: The network device sends a reference signal #2 to the terminal device.

1411: The terminal device performs channel measurement based on the reference signal #2 to obtain second channel information #2.

1412: The terminal device compresses the second channel information #2 based on the first channel information #1 to obtain compressed information #2.

For example, the compressed information #2 includes information in the second channel information #2 other than the first channel information #1, or channel information that is in the second channel information #2 and that is the same as the first channel information #1 is not carried in the compressed information #2.

1413: The terminal device sends the compressed information #2.

Optionally, the method 1400 further includes step 1414.

1414: The network device determines the second channel information #2 based on the compressed information #2 and the first channel information #1.

It may be understood that the method 1400 is merely an example for description, and is not limited thereto. For example, more reference signals and second channel information may be further included.

It may be further understood that in the method 1400, an example in which a network device that sends a reference signal and a network device that sends configuration information are a same network device is used for description. This is not limited herein. For example, the network device that sends the reference signal and the network device that sends the configuration may be different network devices. For another example, there are a plurality of network devices that send reference signals, and the plurality of network devices include the network device that sends the configuration information. Based on the foregoing technical solution, the terminal device may compress one or more pieces of second channel information based on one piece of first channel information, so that the second channel information can be fed back in a timely manner, and feedback overheads are reduced. For example, in the second channel information #1 and the second channel information #2, channel information that is the same as the first channel information #1 needs to be fed back once by using the first channel information #1, and the compressed information #1 and the compressed information #2 do not need to carry the channel information. In this way, channel information feedback overheads can be reduced. In addition, after obtaining the second channel information through channel measurement, the terminal device may feed back the second channel information in a timely manner, and the network device may restore the second channel information based on feedback information (for example, the first channel information #1 and the compressed information #1, or the first channel information #1 and the compressed information #2) received at different time.

It may be understood that some optional features in embodiments of this application may be independent of other features in some scenarios, or may be combined with other features in some scenarios. This is not limited.

It may be further understood that, in some of the foregoing embodiments, sending information is mentioned a plurality of times. For example, A sends information to B. That A sends the information to B may include that A directly sends the information to B, or may include that A sends the information to B through another device or network element. This is not limited.

It may be further understood that, in some of the foregoing embodiments, a terminal device and a network device are mainly used as an example for description. This is not limited. For example, the terminal device may be replaced with a component (for example, a chip or a circuit) of the terminal device, and the network device may be replaced with a component (for example, a chip or a circuit) of the network device.

It may be further understood that, the solutions in embodiments of this application may be appropriately combined for use, and explanations or descriptions of terms in embodiments may be mutually referenced or explained in embodiments. This is not limited.

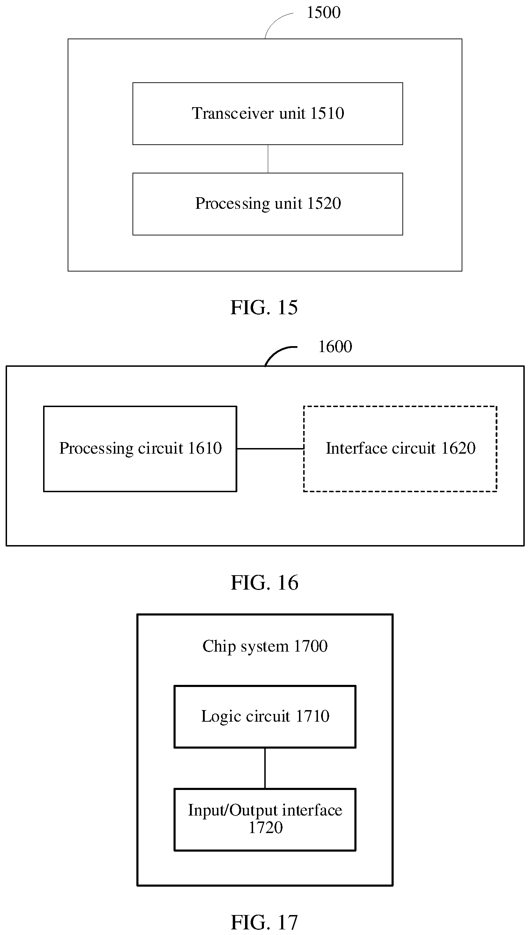

The foregoing describes in detail the method provided in embodiments of this application with reference to FIG. 4 to FIG. 14. The following describes in detail apparatuses provided in embodiments of this application with reference to FIG. 15 to FIG. 17. It should be understood that descriptions of apparatus embodiments correspond to descriptions of method embodiments. Therefore, for content that is not described in detail, refer to the foregoing method embodiments. For brevity, details are not described herein again.

FIG. 15 is a diagram of a communication apparatus 1500 according to an embodiment of this application. The apparatus 1500 includes a transceiver unit 1510 and a processing unit 1520. The transceiver unit 1510 may be configured to implement a corresponding communication function. The transceiver unit 1510 may also be referred to as a communication interface or a communication unit. The processing unit 1520 may be configured to perform processing, for example, determine to compress channel information.

Optionally, the apparatus 1500 may further include a storage unit. The storage unit may be configured to store instructions and/or data. The processing unit 1520 may read the instructions and/or the data in the storage unit, so that the apparatus implements the foregoing method embodiments.

In a design, the apparatus 1500 may be the first communication apparatus (for example, the first communication apparatus in FIG. 4 or the terminal device in FIG. 14) in the foregoing embodiments, and the apparatus 1500 may implement steps or procedures performed by the communication apparatus in the foregoing method embodiments. The transceiver unit 1510 may be configured to perform operations related to receiving and sending (for example, operations of sending and/or receiving data or a message) of the communication apparatus in the foregoing method embodiments. The processing unit 1520 may be configured to perform an operation related to processing of the communication apparatus in the foregoing method embodiments, or an operation other than receiving and sending (for example, an operation other than sending and/or receiving data or a message).

Optionally, the processing unit 1520 is configured to compress N pieces of second channel information based on X pieces of first channel information to obtain M pieces of compressed information, where an i^{th} piece of compressed information in the M pieces of compressed information is obtained by compressing Pᵢ pieces of second channel information based on one piece of first channel information, obtaining time of the first channel information is earlier than obtaining time of the second channel information, X, N, and M are integers greater than or equal to 1, i is an integer greater than or equal to 1 and less than or equal to M, and P is an integer greater than or equal to 1 and less than or equal to N. The transceiver unit 1510 is configured to send the M pieces of compressed information and the X pieces of first channel information.

In another design, the apparatus 1500 may be the second communication apparatus (for example, the second communication apparatus in FIG. 4 or the network device in FIG. 14) in the foregoing embodiments, and the apparatus 1500 may implement steps or procedures performed by the communication apparatus in the foregoing method embodiments. The transceiver unit 1510 may be configured to perform operations related to receiving and sending (for example, operations of sending and/or receiving data or a message) of the communication apparatus in the foregoing method embodiments. The processing unit 1520 may be configured to perform an operation related to processing of the communication apparatus in the foregoing method embodiments, or an operation other than receiving and sending (for example, an operation other than sending and/or receiving data or a message).

Optionally, the transceiver unit 1510 is configured to receive M pieces of compressed information and X pieces of first channel information. The processing unit 1520 is configured to determine Pᵢ pieces of second channel information based on an i^{th} piece of compressed information in the M pieces of compressed information and one piece of first channel information, where obtaining time of the first channel information is earlier than obtaining time of the second channel information, X, N, and M are integers greater than or equal to 1, i is an integer greater than or equal to 1 and less than or equal to M, and P is an integer greater than or equal to 1.

It should be understood that a specific process in which the units perform the foregoing corresponding steps is described in detail in the foregoing method embodiments, and for brevity, details are not described herein again.

It should be understood that the apparatus 1500 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1500 may be specifically the communication apparatus (for example, the first communication apparatus, the second communication apparatus, or the third communication apparatus) in the foregoing embodiments, and may be configured to perform procedures and/or steps corresponding to the communication apparatus in the foregoing method embodiments. To avoid repetition, details are not described herein again.

The apparatus 1500 in the foregoing solutions has a function of implementing corresponding steps performed by the communication apparatus (for example, the first communication apparatus, the second communication apparatus, the third communication apparatus, or another apparatus) in the foregoing method. The function may be implemented by hardware, or may be implemented by hardware executing corresponding software. The hardware or the software includes one or more modules corresponding to the foregoing function. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform receiving and sending operations and a related processing operation in the method embodiments.

In addition, the transceiver unit 1510 may alternatively be a transceiver circuit (for example, may include a receiving circuit and a sending circuit), and the processing unit may be a processing circuit.

It should be noted that the apparatus in FIG. 15 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 16 is a diagram of another communication apparatus 1600 according to an embodiment of this application. The apparatus 1600 includes a processing circuit 1610, including a circuit configured to perform the method in the foregoing method embodiments. In an example, the processing circuit 1610 includes a first circuit and/or a second circuit. The first circuit may be configured to compress N pieces of second channel information based on X pieces of first channel information to obtain M pieces of compressed information, where an i^{th} piece of compressed information in the M pieces of compressed information is obtained by compressing Pᵢ pieces of second channel information based on one piece of first channel information, obtaining time of the first channel information is earlier than obtaining time of the second channel information, X, N, and M are integers greater than or equal to 1, i is an integer greater than or equal to 1 and less than or equal to M, and P is an integer greater than or equal to 1 and less than or equal to N. The second circuit may be configured to send the M pieces of compressed information and the X pieces of first channel information.

It should be understood that a specific process in which the circuits perform the foregoing corresponding steps is described in detail in the foregoing method embodiments, and for brevity, details are not described herein again.

Optionally, the processing circuit 1610 may be implemented by one or more processors, including the one or more processors or a processing part of the one or more processors.

Optionally, the apparatus 1600 further includes an interface circuit 1620. The interface circuit 1620 is configured to receive and/or send a signal. For example, the processing circuit 1610 is configured to control the interface circuit 1620 to receive and/or send a signal.

Optionally, the apparatus 1600 further includes a memory. The processing circuit 1610 is coupled to the memory. The memory is configured to store a computer program or instructions and/or data. The processing circuit 1610 may be configured to execute the computer program or the instructions stored in the memory, or read the data stored in the memory. Optionally, there are one or more memories.

Optionally, the memory is located inside the processing circuit, or is separately disposed outside the processing circuit.

In an example, the processing circuit 1610 may have a function of the processing unit 1520 shown in FIG. 15, and the interface circuit 1620 may have a function of the transceiver unit 1510 shown in FIG. 15.

The interface circuit 1620 may include a transceiver, an input/output circuit, or a communication interface.

In a solution, the apparatus 1600 is configured to implement operations performed by the communication apparatus (for example, the first communication apparatus or the second communication apparatus) in the foregoing method embodiments.

For example, the processing circuit 1610 is configured to perform related operations of the communication apparatus (for example, the first communication apparatus or the second communication apparatus) in the foregoing method embodiments.

In other words, the apparatus 1600 may be a terminal device, a network device, a chip or a chip system used in the terminal device, or a chip or a chip system used in the network device.

It should be understood that the processing circuit mentioned in embodiments of this application may be one or more of the following processor components: a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or a part that is used for a processing function in the foregoing processor component. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes the following plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processing circuit is a general-purpose processor, a DSP, an ASIC, an FPGA or another programmable logic device, a discrete gate or a transistor logic device, or a discrete hardware component, a memory (storage module) may be integrated into the processing circuit.

It should further be noted that the memory described in this specification is intended to include, but is not limited to these memories and any memory of another appropriate type.

FIG. 17 is a diagram of a chip system 1700 according to an embodiment of this application. The chip system 1700 (or may also be referred to as a processing system) includes a logic circuit 1710 and an input/output interface (input/output interface) 1720.

The logic circuit 1710 may be a processing circuit in the chip system 1700. The logic circuit 1710 may be a processing circuit in the chip system 1700, and is configured to perform a processing function, for example, compress channel information. The input/output interface 1720 may be an input/output circuit in the chip system 1700, and outputs information processed by the chip system 1700, or inputs to-be-processed data or signaling information into the chip system 1700 for processing.

Alternatively, the logic circuit 1710 may be coupled to a memory, and execute instructions in the memory, so that the chip system 1700 can implement the method and functions in embodiments of this application.

Specifically, for example, if a first communication apparatus includes the chip system 1700, and the logic circuit 1710 is coupled to the input/output interface 1720, the logic circuit 1710 may compress N pieces of second channel information based on X pieces of first channel information to obtain M pieces of compressed information, and send the M pieces of compressed information and the X pieces of first channel information through the input/output interface 1720. For another example, if a second communication apparatus includes the chip system 1700, and the logic circuit 1710 is coupled to the input/output interface 1720, the input/output interface 1720 may input M pieces of compressed information and X pieces of first channel information from a first communication apparatus to the logic circuit 1710 for processing.

In a solution, the chip system 1700 is configured to implement operations performed by the communication apparatus (for example, the first communication apparatus or the second communication apparatus) in the foregoing method embodiments.

For example, the logic circuit 1710 is configured to implement an operation related to processing performed by the communication apparatus (for example, the first communication apparatus or the second communication apparatus) in the foregoing method embodiments. The input/output interface 1720 is configured to implement an operation related to sending and/or receiving performed by the communication apparatus (for example, the first communication apparatus or the second communication apparatus) in the foregoing method embodiments.

An embodiment of this application further provides a computer-readable storage medium. The computer-readable storage medium stores computer instructions used to implement the method performed by the communication apparatus (for example, the first communication apparatus or the second communication apparatus) in the foregoing method embodiments.

For example, when a computer program is executed by a computer, the computer is caused to implement the method performed by the communication apparatus (for example, the first communication apparatus or the second communication apparatus) in the foregoing method embodiments.

An embodiment of this application further provides a computer program product, including instructions. When the instructions are executed by a computer, the method performed by the communication apparatus (for example, the first communication apparatus or the second communication apparatus) in the foregoing method embodiments is implemented.

An embodiment of this application further provides a communication system. The communication system includes the first communication apparatus and the second communication apparatus in the foregoing embodiments. For example, the system includes the first communication apparatus and the second communication apparatus in the embodiment shown in FIG. 4. For another example, the system includes the terminal device and the network device in the embodiment in FIG. 14.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium includes but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
compressing N pieces of second channel information based on X pieces of first channel information to obtain M pieces of compressed information, wherein an i^{th} piece of compressed information in the M pieces of compressed information is obtained by compressing Pᵢ pieces of second channel information based on one piece of first channel information, obtaining time of the first channel information is earlier than obtaining time of the second channel information, X, N, and M are integers greater than or equal to 1, i is an integer greater than or equal to 1 and less than or equal to M, and P is an integer greater than or equal to 1 and less than or equal to N; and
sending the M pieces of compressed information and the X pieces of first channel information.

2. The method according to claim 1, wherein the X pieces of first channel information are obtained based on W pieces of third channel information, one of the X pieces of first channel information is obtained based on at least two of the W pieces of third channel information, and W is an integer greater than X.

3. The method according to claim 1 or 2, wherein the i^{th} piece of compressed information comprises information in the Pᵢ pieces of second channel information other than the first channel information.

4. The method according to any one of claims 1 to 3, wherein the method further comprises:
receiving first indication information, wherein the first indication information indicates configuration information of each of the M pieces of compressed information, and at least two of the M pieces of compressed information have different configuration information.

5. The method according to claim 4, wherein the configuration information of each of the M pieces of compressed information comprises at least one of the following: feedback time of each piece of compressed information, a feedback periodicity of each piece of compressed information, or a time offset of each piece of compressed information.

6. The method according to any one of claims 1 to 5, wherein the i^{th} piece of compressed information is obtained by compressing the Pᵢ pieces of second channel information based on a j^{th} piece of first channel information, j is an integer greater than or equal to 1 and less than or equal to X, and the method further comprises:
sending or receiving second indication information, wherein the second indication information indicates that the i^{th} piece of compressed information is associated with the j^{th} piece of first channel information.

7. The method according to claim 6, wherein that the second indication information indicates that the i^{th} piece of compressed information is associated with the j^{th} piece of first channel information comprises:
the second indication information indicates at least one of the following of an effective period of the j^{th} piece of first channel information: a start moment, an end moment, or a time length, wherein a sending moment of the i^{th} piece of compressed information is within the effective period of the j^{th} piece of first channel information; or
the second indication information indicates a time domain offset threshold between the i^{th} piece of compressed information and the first channel information applicable to the i^{th} piece of compressed information.

8. The method according to any one of claims 1 to 5, wherein the i^{th} piece of compressed information is obtained by compressing the Pᵢ pieces of second channel information based on a j^{th} piece of first channel information, an association relationship between the i^{th} piece of compressed information and the j^{th} piece of first channel information is predefined or preconfigured, and j is an integer greater than or equal to 1 and less than or equal to X.

9. The method according to any one of claims 1 to 8, wherein the method further comprises:
receiving third indication information, wherein the third indication information indicates configuration information of each of N reference signals, and at least two of the N reference signals have different configuration information;
receiving the N reference signals based on the third information; and
performing channel measurement on N channels based on the N reference signals to obtain the N pieces of channel information.

10. The method according to claim 9, wherein the configuration information of each of the N reference signals comprises at least one of the following: a periodicity of each reference signal, a periodicity value of each reference signal, or a time offset of each reference signal.

11. The method according to any one of claims 1 to 10, wherein the method further comprises:
receiving or sending fourth indication information, wherein the fourth indication information indicates the Pᵢ pieces of second channel information corresponding to the i^{th} piece of compressed information.

12. The method according to any one of claims 1 to 11, wherein the compressing the N pieces of second channel information based on the X pieces of first channel information to obtain the M pieces of compressed information comprises:
compressing the X pieces of first channel information and the N pieces of second channel information by using at least one artificial intelligence AI model to obtain the M pieces of compressed information; or
projecting the N pieces of second channel information onto the X pieces of first channel information by using the X pieces of first channel information as a basis to obtain the M pieces of compressed information.

13. A communication method, comprising:
receiving M pieces of compressed information and X pieces of first channel information; and
determining Pᵢ pieces of second channel information based on an i^{th} piece of compressed information in the M pieces of compressed information and one piece of first channel information, wherein obtaining time of the first channel information is earlier than obtaining time of the second channel information, X and M are integers greater than or equal to 1, i is an integer greater than or equal to 1 and less than or equal to M, and P is an integer greater than or equal to 1.

14. The method according to claim 13, wherein the X pieces of first channel information are obtained based on W pieces of third channel information, one of the X pieces of first channel information is obtained based on at least two of the W pieces of third channel information, and W is an integer greater than X.

15. The method according to claim 13 or 14, wherein the i^{th} piece of compressed information comprises information in the Pᵢ pieces of second channel information other than the first channel information.

16. The method according to any one of claims 13 to 15, wherein the method further comprises:
sending first indication information, wherein the first indication information indicates configuration information of each of the M pieces of compressed information, and at least two of the M pieces of compressed information have different configuration information.

17. The method according to claim 16, wherein the configuration information of each of the M pieces of compressed information comprises at least one of the following: feedback time of each piece of compressed information, a feedback periodicity of each piece of compressed information, or a time offset of each piece of compressed information.

18. The method according to any one of claims 13 to 17, wherein the method further comprises:
sending or receiving second indication information, wherein the second indication information indicates that the i^{th} piece of compressed information is associated with a j^{th} piece of first channel information, and j is an integer greater than or equal to 1 and less than or equal to X; and
the determining the Pᵢ pieces of second channel information based on the i^{th} piece of compressed information in the M pieces of compressed information and one piece of first channel information comprises:
determining the Pᵢ pieces of second channel information based on that the i^{th} piece of compressed information is associated with the j^{th} piece of first channel information and based on the i^{th} piece of compressed information and the j^{th} piece of first channel information.

19. The method according to claim 18, wherein that the second indication information indicates that the i^{th} piece of compressed information is associated with the j^{th} piece of first channel information comprises:
the second indication information indicates at least one of the following of an effective period of the j^{th} piece of first channel information: a start moment, an end moment, or a time length, wherein a sending moment of the i^{th} piece of compressed information is within the effective period of the j^{th} piece of first channel information, or a receiving moment of the i^{th} piece of compressed information is within the effective period of the j^{th} piece of first channel information;
or
the second indication information indicates a time domain offset threshold between the i^{th} piece of compressed information and the first channel information applicable to the i^{th} piece of compressed information.

20. The method according to any one of claims 13 to 19, wherein the determining the Pᵢ pieces of second channel information based on the i^{th} piece of compressed information in the M pieces of compressed information and one piece of first channel information comprises:
determining the Pᵢ pieces of second channel information based on that the i^{th} piece of compressed information is associated with the j^{th} piece of first channel information and based on the i^{th} piece of compressed information and the j^{th} piece of first channel information, wherein an association relationship between the i^{th} piece of compressed information and the j^{th} piece of first channel information is predefined or preconfigured, and j is an integer greater than or equal to 1 and less than or equal to X.

21. The method according to any one of claims 13 to 20, wherein the method further comprises:
sending N reference signals, wherein the N reference signals are used to perform channel measurement on N channels corresponding to the N pieces of channel information.

22. The method according to claim 21, wherein the method further comprises:
sending third indication information, wherein the third indication information indicates configuration information of each of the N reference signals, and at least two of the N reference signals have different configuration information.

23. The method according to any one of claims 13 to 22, wherein the method further comprises:
receiving or sending fourth indication information, wherein the fourth indication information indicates the Pᵢ pieces of second channel information corresponding to the i^{th} piece of compressed information.

24. The method according to any one of claims 13 to 23, wherein the determining the Pᵢ pieces of second channel information based on the i^{th} piece of compressed information in the M pieces of compressed information and one piece of first channel information comprises:
decoding the i^{th} piece of compressed information and the piece of first channel information by using an artificial intelligence AI model to obtain the Pᵢ pieces of second channel information.

25. A communication method, comprising:
compressing N pieces of second channel information based on W pieces of third channel information to obtain M pieces of compressed information, wherein an i^{th} piece of compressed information in the M pieces of compressed information is obtained by compressing Pᵢ pieces of second channel information based on Qᵢ pieces of third channel information, obtaining time of the third channel information is earlier than obtaining time of the second channel information, W, N, and M are integers greater than or equal to 1, i is an integer greater than or equal to 1 and less than or equal to M, P is an integer greater than or equal to 1 and less than or equal to N, and Q is an integer greater than 1 and less than or equal to W; and
sending the M pieces of compressed information.

26. The method according to claim 25, wherein the method further comprises:
sending compressed information corresponding to the W pieces of third channel information.

27. The method according to claim 25 or 26, wherein the i^{th} piece of compressed information comprises information in the Pᵢ pieces of second channel information other than information that is the same as the Qᵢ pieces of third channel information.

28. The method according to any one of claims 25 to 27, wherein the method further comprises:
receiving first indication information, wherein the first indication information indicates configuration information of each of the M pieces of compressed information, and at least two of the M pieces of compressed information have different configuration information.

29. The method according to claim 28, wherein the configuration information of each of the M pieces of compressed information comprises at least one of the following: feedback time of each piece of compressed information, a feedback periodicity of each piece of compressed information, or a time offset of each piece of compressed information.

30. The method according to any one of claims 25 to 29, wherein the method further comprises:
sending or receiving second indication information, wherein the second indication information indicates that the i^{th} piece of compressed information is associated with compressed information corresponding to the Qᵢ pieces of third channel information or is associated with the Qᵢ pieces of third channel information.

31. The method according to claim 30, wherein that the second indication information indicates that the i^{th} piece of compressed information is associated with the compressed information corresponding to the Qᵢ pieces of third channel information or is associated with the Qᵢ pieces of third channel information comprises:
the second indication information indicates at least one of the following of an effective period of the compressed information corresponding to the Qᵢ pieces of third channel information or effective periods of the Qᵢ pieces of third channel information: a start moment, an end moment, or a time length, wherein a sending moment of the i^{th} piece of compressed information is within the effective period of the compressed information corresponding to the Qᵢ pieces of third channel information or the effective periods of the Qᵢ pieces of third channel information; or
the second indication information indicates a time domain offset threshold between the i^{th} piece of compressed information and the compressed information corresponding to the Qᵢ pieces of third channel information applicable to the i^{th} piece of compressed information, or a time domain offset threshold between the i^{th} piece of compressed information and the Qᵢ pieces of third channel information applicable to the i^{th} piece of compressed information.

32. The method according to any one of claims 25 to 31, wherein the method further comprises:
receiving N reference signals; and
performing channel measurement on N channels based on the N reference signals to obtain the N pieces of channel information.

33. The method according to claim 32, wherein the method further comprises:
receiving third indication information, wherein the third indication information indicates configuration information of each of the N reference signals, and at least two of the N reference signals have different configuration information.

34. The method according to claim 32 or 33, wherein the configuration information of each of the N reference signals comprises at least one of the following: a periodicity of each reference signal, a periodicity value of each reference signal, or a time offset of each reference signal.

35. The method according to any one of claims 25 to 34, wherein the method further comprises:
receiving or sending fourth indication information, wherein the fourth indication information indicates the Pᵢ pieces of second channel information corresponding to the i^{th} piece of compressed information.

36. The method according to any one of claims 25 to 35, wherein the compressing the N pieces of second channel information based on the W pieces of third channel information to obtain the M pieces of compressed information comprises:
compressing the W pieces of third channel information and the N pieces of second channel information by using at least one artificial intelligence AI model to obtain the M pieces of compressed information.

37. A communication method, comprising:
obtaining W pieces of third channel information;
receiving M pieces of compressed information; and
determining Pᵢ pieces of second channel information based on an i^{th} piece of compressed information in the M pieces of compressed information and Qᵢ pieces of third channel information in the W pieces of third channel information, wherein obtaining time of the third channel information is earlier than obtaining time of the second channel information, M and P are integers greater than or equal to 1, i is an integer greater than or equal to 1 and less than or equal to M, W is an integer greater than 1, and Q is an integer greater than or equal to 1 and less than or equal to W.

38. The method according to claim 37, wherein the method further comprises:
receiving compressed information corresponding to the W pieces of third channel information; and
the obtaining the W pieces of third channel information comprises:
obtaining the W pieces of third channel information based on the compressed information corresponding to the W pieces of third channel information.

39. The method according to claim 37 or 38, wherein the i^{th} piece of compressed information comprises information in the Pᵢ pieces of second channel information other than information that is the same as the Qᵢ pieces of third channel information.

40. The method according to any one of claims 37 to 39, wherein the method further comprises:
sending first indication information, wherein the first indication information indicates configuration information of each of the M pieces of compressed information, and at least two of the M pieces of compressed information have different configuration information.

41. The method according to claim 40, wherein the configuration information of each of the M pieces of compressed information comprises at least one of the following: feedback time of each piece of compressed information, a feedback periodicity of each piece of compressed information, or a time offset of each piece of compressed information.

42. The method according to any one of claims 37 to 41, wherein the method further comprises:
sending or receiving second indication information, wherein the second indication information indicates that the i^{th} piece of compressed information is associated with compressed information corresponding to the Qᵢ pieces of third channel information or is associated with the Qᵢ pieces of third channel information.

43. The method according to claim 42, wherein that the second indication information indicates that the i^{th} piece of compressed information is associated with the compressed information corresponding to the Qᵢ pieces of third channel information or is associated with the Qᵢ pieces of third channel information comprises:
the second indication information indicates at least one of the following of an effective period of the compressed information corresponding to the Qᵢ pieces of third channel information or effective periods of the Qᵢ pieces of third channel information: a start moment, an end moment, or a time length, wherein a sending moment of the i^{th} piece of compressed information is within the effective period of the compressed information corresponding to the Qᵢ pieces of third channel information or the effective periods of the Qᵢ pieces of third channel information; or
the second indication information indicates a time domain offset threshold between the i^{th} piece of compressed information and the compressed information corresponding to the Qᵢ pieces of third channel information applicable to the i^{th} piece of compressed information, or a time domain offset threshold between the i^{th} piece of compressed information and the Qᵢ pieces of third channel information applicable to the i^{th} piece of compressed information.

44. The method according to any one of claims 37 to 43, wherein the method further comprises:
sending third indication information, wherein the third indication information indicates configuration information of each of the N reference signals, and at least two of the N reference signals have different configuration information.

45. The method according to claim 44, wherein the configuration information of each of the N reference signals comprises at least one of the following: a periodicity of each reference signal, a periodicity value of each reference signal, or a time offset of each reference signal.

46. The method according to any one of claims 37 to 45, wherein the method further comprises:
receiving or sending fourth indication information, wherein the fourth indication information indicates the Pᵢ pieces of second channel information corresponding to the i^{th} piece of compressed information.

47. A communication apparatus, comprising a module or a unit configured to perform the method according to any one of claims 1 to 46.

48. A communication apparatus, comprising a processor, wherein the processor is configured to cause the communication apparatus to perform the method according to any one of claims 1 to 46.

49. The apparatus according to claim 48, wherein the apparatus further comprises a memory and/or a communication interface, wherein
the communication interface is coupled to the processor, and the communication interface is configured to input and/or output information; and
the memory is configured to store a computer program or instructions executed by the processor.

50. The apparatus according to any one of claims 47 to 49, wherein the apparatus is any one of the following: a communication device, a chip, a chip system, or a circuit.

51. A computer-readable storage medium, wherein the computer-readable storage medium stores a computer program or instructions, and when the computer program or the instructions are run on a communication apparatus, the communication apparatus is caused to perform the method according to any one of claims 1 to 46.

52. A computer program product, wherein the computer program product comprises a computer program or instructions used to perform the method according to any one of claims 1 to 46.
